(19) Europäisches Patentamt
European Patent Office
Office européen des brevets

(11) EP 4 077 553 B1

(12) EUROPEAN PATENT SPECIFICATION

(45) Date of publication and mention of the grant of the patent:
**22.07.2026 Bulletin 2026/30**

(21) Application number: **20824930.0**

(22) Date of filing: **15.12.2020**

(51) International Patent Classification (IPC):
***C09D 11/03*** (2014.01) ***C09D 11/101*** (2014.01)
***B42D 25/29*** (2014.01) ***B42D 25/387*** (2014.01)
*B41M 1/06* (2006.01) *B41M 3/14* (2006.01)
*B41M 7/00* (2006.01)

(52) Cooperative Patent Classification (CPC):
**C09D 11/101; B42D 25/29; B42D 25/387;**
**C09D 11/03;** B41M 1/06; B41M 3/14; B41M 7/0081

(86) International application number:
**PCT/EP2020/086189**

(87) International publication number:
**WO 2021/122574 (24.06.2021 Gazette 2021/25)**

# (54) UV-LED RADICALLY CURABLE OFFSET PRINTING INKS AND PRINTING PROCESSES

RADIKALISCH UV-LED-HÄRTBARE OFFSETDRUCKFARBEN UND DRUCKVERFAHREN

ENCRES D'IMPRESSION DE DÉCALAGE À UV-DEL RADICALEMENT DURCISSABLES ET PROCÉDÉS D'IMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **18.12.2019 EP 19217484**

(43) Date of publication of application:
**26.10.2022 Bulletin 2022/43**

(73) Proprietor: **SICPA HOLDING SA**
**1008 Prilly (CH)**

(72) Inventors:
- **HOGGETT, John**
  **74200 Thonon (FR)**
- **CHABRIER, Stéphane**
  **1092 Belmont-sur-Lausanne (CH)**

(74) Representative: **Hoffmann Eitle**
**Patent- und Rechtsanwälte PartmbB**
**Arabellastraße 30**
**81925 München (DE)**

(56) References cited:
**WO-A1-2014/035880** **WO-A1-2014/165323**
**JP-A- 2015 155 499**

EP 4 077 553 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD OF THE INVENTION

The present invention relates to the field of the protection of security documents against counterfeit and illegal reproduction. In particular, the present invention relates to the field of UV-LED radically curable offset printing inks and processes for producing features or patterns on security documents.

### BACKGROUND OF THE INVENTION

With the constantly improving quality of color photocopies and printings and in an attempt to protect security documents such as banknotes, value documents or cards, transportation tickets or cards, tax banderols, and product labels that have no reproducible effects against counterfeiting, falsifying or illegal reproduction, it has been the conventional practice to incorporate various security means in and on these documents. Typical examples of security means include security threads, windows, fibers, planchettes, foils, decals, holograms, watermarks, security inks comprising optically variable pigments, magnetic or magnetizable thin-film interference pigments, interference-coated particles, thermochromic pigments, photochromic pigments, luminescent compounds, infrared-absorbing compounds, ultraviolet-absorbing or magnetic compounds.

It is known in the art to apply inks on security documents in several printing steps, including different printing processes using low viscous inks such as screen printing inks, flexography printing inks and gravure printing inks as well as highly viscous or pasty inks such as offset printing inks, intaglio printing inks and letterpress printing inks.

Offset printing processes consist of indirect methods wherein an ink is first transferred from a printing plate to a blanket cylinder and onto a substrate. Offset printing processes are either wet offset processes or dry offset processes. Wet offset processes take advantage of the difference in surface energy between the image area and the non-image area of the printing plate. The image area is oleophilic, whereas the non-image area is hydrophilic. Thus, oily inks used in the method tend to adhere to the image-area and to be repelled from the non-image area of the printing plate. Wet offset printing is typically carried out by feeding both a fountain solution (also referred in the art as dampening solution) and an oleophilic ink to the printing plate surface to allow the image areas to receive preferentially the ink and the non-image areas preferentially the fountain solution and then transferring the ink deposited on image areas onto a substrate via the printing cylinder. Dry offset processes are methods wherein the blanket cylinder is covered with a metal-backed photopolymer forming reliefs carrying the motifs to be printed. The ink adheres to the reliefs and is then transferred to the substrate via the printing cylinder. In this case, no fountain solution is required.

It is known in the art that offset printing is usually the first step to produce printed features as a background design of security documents. Drying of offset inks involve either an oxidative process (i.e. the ink contains an oxidative drier that react with the oxygen of the air to produce free radicals that initiate the polymerization process of the ink matrix) or a radiation curing process, in particular an UV curing process (i.e. the ink contains photoinitiators that, by interaction with light, produce free radicals that initiate the polymerization of the ink matrix). Oxidative drying is a slow process while UV-curing is almost instantaneous. Since security printing is a costly and multistep process requiring several intermediate drying steps, UV radically curable offset printing inks are usually preferred in this field. UV radically curable offset printing inks are applied as thin layers with a thickness of about 0.5 $\mu$m to about 3 $\mu$m (in the cured state) to produce features on security documents.

Offset inks may be applied on both sides of the substrate (Simultan process) to print features as a background design of security documents, wherein the curing step is may be carried out simultaneously or subsequently. Typical industrial printing speed is between about 8000 sheets/hour and about 12’000 sheets/hour.

Failure of the ink to rapidly and efficiently dry and cure results in set off. Set off occurs when a printing ink which is not sufficiently dried or cured at least partially adheres to the back of a printed substrate placed on top of it during the stacking of printed substrates as it comes off the printing machines (see e.g. US 4,604,952). This is a particular problem during the printing of features on security documents, especially banknotes, since said documents typically carry several overlapping or partially overlapping features which are applied in subsequent steps. If the previously applied feature, e.g. a background image or graphic pattern, has not yet sufficiently dried or cured, the whole multi-step printing process is not only delayed but also the so-obtained feature may still suffer from set off or marking due to set off on the machine during any subsequent printing or process operations.

During a conventional banknote printing process, offset inks are applied during one of the first steps of the overall multi-step printing process, wherein the offset printing is followed with other printing steps including intaglio printing and screen printing. If a feature or pattern is printed on a security document such as a banknote by an offset printing process and if said feature or pattern suffers from low surface curing properties, the subsequent printing step might be delayed or set off may occur. Accordingly, it is critical that the offset inks are completely dried or cured before starting other printing steps in order to avoid any set off issues, in particular when the subsequent step is an intaglio printing step, because the

intaglio printing press applies a very high pressure to the printed substrate.

UV radically curable inks are cured by free radical mechanisms consisting of the activation of one or more photoinitiators able to liberate free radicals upon the action of radiation, in particular of UV light, which in turn initiate the polymerization so as to form a cured layer. Known free radical photoinitiators include for example acetophenones, benzophenones, alpha-aminoketones, alpha-hydroxyketones, phosphine oxides and phosphine oxide derivatives and benzyldimethyl ketals.

UV energy is usually provided by mercury lamps, in particular by medium-pressure mercury lamps. Mercury lamps require a high amount of energy, need efficient and costly heat dissipation systems, are prone to ozone formation and have a limited lifespan.

With the aim of providing solutions that are less costly, require less intervention and are more environmentally friendly, lamps and systems based on UV-LEDs have been developed for curing inks and coatings. On the contrary to medium-pressure mercury lamps that have emission bands in the UV-A, UV-B and UV-C regions of the electromagnetic spectrum, UV-LED lamps emit radiation in the UV-A region. Moreover, current UV-LED lamps emit quasi monochromatic radiation, i.e. only emit at one wavelength, such as 365 nm, 385 nm, 395 nm or 405 nm.

UV-curing efficiency of a coating or ink layer depends inter alia on the overlap of the emission spectrum of the irradiation source used for said curing and the absorption spectrum of the photoinitiator comprised in the coating or ink. Accordingly, UV-curing of coating or ink layers comprising conventionally used free radical photoinitiators with UV-LED lamps suffers from a reduced curing efficiency as a result of the poor overlap of the emission spectrum of the lamp with the absorption of the conventionally used free radical photoinitiators, thus leading to slow or poor curing or curing defects.

Photoinitiators having an absorption spectrum approximately corresponding to the emission wavelength of currently available UV-LED radiation sources include alpha-aminoketones, thioxanthones, ketocoumarins, bis[4(dimethylamino)phenyl]methanone derivatives (also called Michler's ketones) and acyl phosphines. However, alpha-aminoketones and Michler's ketones have recently raised health and/or environment concerns. Ketocoumarins, which are also known to be highly fluorescent, have low curing efficiency and are mainly experimental and/or development products.

Acyl-phosphine photoinitiators are widely used for curing with UV-LED radiation sources due to their red-shifted absorption spectrum (maximum absorption wavelength around 370 nm). They are known to exhibit low fluorescence. However, acyl-phosphine photoinitiators may still suffer from slow curing performance, especially slow surface curing performance, and are known to be particularly sensitive to oxygen inhibition, which make them not very efficient for the curing of thin layers.

Currently used thioxanthone derivatives have maximum absorption wavelength between about 370 nm and about 410 nm. However and to the contrary of acyl phosphine oxides, currently used thioxanthones suffer from fluorescence.

As mentioned hereabove, UV radically curable offset printing inks are used in the field of the protection of security documents, value documents and articles against counterfeit and illegal reproduction to be applied as thin layers on security documents in the form of printed features or patterns. It is well known that luminescent security features have been widely used in the field of security documents, in particular for banknotes, to confer said security documents additional covert security feature, wherein the protection of said security documents against counterfeit and illegal reproduction relies on the concept that such features typically require specialized equipment and knowledge for their detection. Luminescent security features include for example luminescent fibers, luminescent threads, luminescent patches, stripes or foils (wherein at least a part of said patches, stripes or foils is luminescent) and printed luminescent features. Said printed features include luminescent numbering (printed by letterpress), printed patches (printed by letterset), as well as luminescent features printed by offset, usually at the same time and with the same printing press as used to produce security features as a background design of security documents.

JP2015155499A discloses active energy ray-curable offset inks for toys and food packaging applications which cure well under active energy ray conditions. The disclosed inks comprise a resin oligomer and an $\alpha$-aminoalkylphenone photopolymerization initiator and a thioxanthone photopolymerization initiator having a number average molecular weight of 300 or more and 1400 or less.

Since security documents further comprise, in addition to offset printed features, luminescent security features, in particular printed luminescent security features, either on the same side as the offset printed feature or on the opposite side, it is required said that said offset printed features do not exhibit fluorescence per se, do not exhibit fluorescence through the substrate onto which they are applied and do not exhibit fluorescence by contact between two printed security documents by contamination so as to avoid a negative impact on the machine detection and/or human recognition of luminescent security features.

Thus, there remains a need for UV-LED radically curable offset printing inks and processes for printing features on security documents at high speed (i.e. industrial speed), said UV-LED curable offset printing inks exhibiting good curing properties and, after having cured said inks, they allow to produce printed features exhibiting low or non-fluorescence.

## SUMMARY OF THE INVENTION

Accordingly, it is an object of the present invention to overcome the deficiencies of the prior art as discussed above. This is achieved by the provision of UV-LED radically curable offset printing inks having a viscosity in the range of 2.5 to 25 Pa s at 40°C and 1000 $s^{-1}$ for offset printing a feature on a substrate, said UV-LED radically curable offset printing ink comprising:

i) from 10 wt.% to 80 wt.% of radically curable (meth)acrylate compounds;
ii) from 4 wt.% to 20 wt.% of one or more photoinitiators of formula (I):

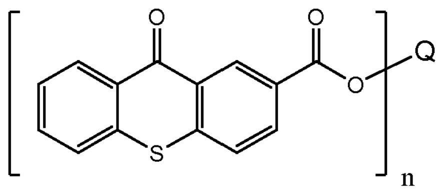

(I)

wherein Q has the following formula (IIa), (IIb) or (IIc):

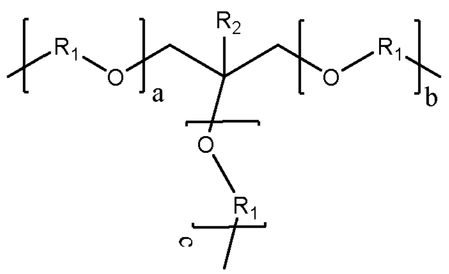

(IIa)

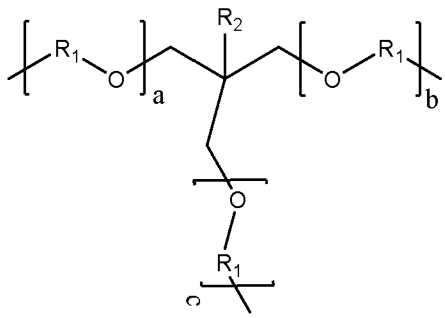

(IIb)

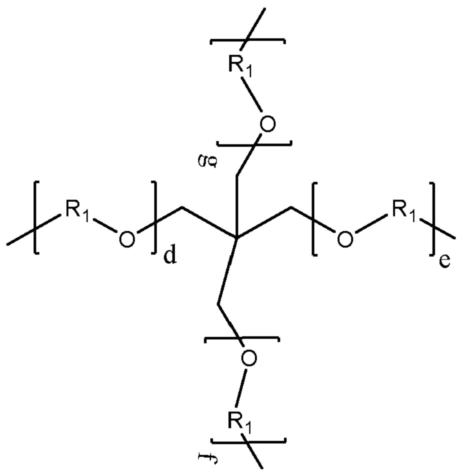

(IIc)

wherein n is equal to or bigger than 1, R1 are identical or different from each other and are selected from the group consisting of $C_1$-$C_3$-alkylene groups, R2 are selected from the group consisting of hydrogen and $C_1$-$C_3$-alkyl groups, and wherein the sum a+b+c is between 3 and 12 and the sum d+e+f+g is between 4 and 16.
iii) from 1 wt.% to 15 wt.% of one or more amino containing compounds selected from the group consisting of aminobenzoate compounds having a weight average molecular weight of at least 400 g/mol eq PS, amine modified polyether based acrylates having a weight average molecular weight of at least 400 g/mol eq PS and combinations

thereof, and

iv) from 1 wt.% to 30 wt.% of one or more inorganic pigments and/or one or more organic pigments, and

v) from 0.5 wt.% to 10 wt.% of one or more fillers and/or extenders,

the weight percents being based on the total weight of the UV-LED radically curable offset printing ink, as further specified in the appended claims.

The UV-LED radically curable offset printing inks described herein are particularly suitable to be cured by exposure to UV light, preferably to one or more wavelengths between 355 nm and 415 nm, with a UV-LED light source. Described herein are processes for printing one or more features on a substrate by an offset printing process comprising the steps of applying the UV-LED radically curable offset printing ink described herein by offset printing so as to form an ink layer and exposing the ink layer to UV light at a dose of at least 150 $mJ/cm^2$, preferably at least 200 $mJ/cm^2$, to cure said ink layer with a UV-LED source.

Also described herein are features consisting of a cured ink layer made from the UV-LED radically curable offset printing ink described herein. Described herein are uses of the features described herein for the protection of a security document, value document or article against counterfeiting or fraud and security documents, value documents or articles comprising the one or more printed features described herein.

Also described herein are security documents comprising the substrate described herein and the one or more printed features described herein.

Also described herein are uses of the one or more photoinitiators described herein in an amount from 4 wt.% to 20 wt.%, preferably in an amount from about 5 wt.% to about 15 wt.%, more preferably in an amount from about 8 wt.% to about 12 wt.%, and the one or more amino containing compounds described herein in an amount from 1 wt.% to 15 wt.%, for producing a UV-LED radically curable offset printing ink having a viscosity in the range of 2.5 to 25 Pa s at 40°C and 1000 $s^{-1}$, said UV-LED radically curable offset printing ink being suitable for printing one or more features on a security document, said UV-LED radically curable offset printing ink comprising from 10 wt.% to 80 wt.% of radically curable (meth) acrylate compounds, from 1 wt.% to 30 wt.% of one or more inorganic pigments and/or one or more organic pigments and from 0.5 wt.% to 10 wt.% of one or more fillers and/or extenders, the weight percents being based on the total weight of the UV-LED radically curable offset printing ink.

## DESCRIPTION OF THE DRAWING

Fig. 1 depicts a banknote comprising a substrate (1), different security features (2-9) including a feature printed by offset, wherein said feature covers more than 70% of the total surface of the security document.

## DETAILED DESCRIPTION

### Definitions

The following definitions clarify the meaning of the terms used in the description and in the claims.

As used herein, the indefinite article "a" indicates one as well as more than one and does not necessarily limit its referent noun to the singular.

As used herein, the term "about" means that the amount, value or limit in question may be the specific value designated or some other value in its neighborhood. Generally, the term "about" denoting a certain value is intended to denote a range within $\pm$ 5% of the value. For example, the phrase "about 100" denotes a range of 100 $\pm$ 5, i.e. the range from 95 to 105. Generally, when the term "about" is used, it can be expected that similar results or effects according to the invention can be obtained within a range of $\pm$5% of the indicated value. However, a specific amount, value or limit supplemented with the term "about" is intended herein to disclose as well the very amount, value or limit as such, i.e. without the "about" supplement.

As used herein, the term "and/or" means that either all or only one of the elements of said group may be present. For example, "A and/or B" shall mean "only A, or only B, or both A and B". In the case of "only A", the term also covers the possibility that B is absent, i.e. "only A, but not B".

As used herein, the term "one or more" means one, two, three, four, etc.

The term "comprising" as used herein is intended to be non-exclusive and open-ended. Thus, for instance an ink comprising a compound A may include other compounds besides A. However, the term "comprising" also covers, as a particular embodiment thereof, the more restrictive meanings of "consisting essentially of" and "consisting of", so that for instance "an ink comprising a compound A" may also (essentially) consist of the compound A.

Where the present description refers to "preferred" embodiments/features, combinations of these "preferred" embodiments/features shall also be deemed as disclosed as long as this combination of "preferred" embodiments/features is technically meaningful.

The term UV (ultraviolet) as used herein is intended to mean irradiation having a wavelength component in the UV part of the electromagnetic spectrum; typically 200 nm to 400 nm.

The term "security document" refers to a document which is usually protected against counterfeit or fraud by at least one security feature. Examples of security documents include without limitation value documents and value commercial goods.

The descriptions of specific embodiments of the present invention are presented for purposes of illustration and description. They are not intended to be exhaustive or to limit the present invention to the precise forms disclosed, and obviously many modifications and variations are possible in light of the above teaching. The exemplary embodiments were chosen and described in order to best explain the principles of the present invention and its practical application, to thereby enable other persons skilled in the art to best use the present invention and various embodiments with various modifications as are suited to the particular use contemplated.

The present invention provides UV-LED radically curable offset printing inks for producing (printing) one or more features on a security document by an offset printing process. The present invention further provides printed features consisting of a cured ink layer made from the UV-LED radically curable offset printing ink described herein and security documents comprising the one or more printed features described herein. The UV-LED radically curable offset printing inks described herein are applied by an offset printing step, wherein said offset printing may be a wet printing process or a dry offset printing process.

The one or more radically curable (meth)acrylate compounds of the UV-LED radically curable offset printing ink described herein undergo curing in the presence of the one or more photoinitiators described herein and the one or more amino containing compounds described herein by exposure to UV light, preferably to one or more wavelengths between about 355 nm and about 415 nm, more preferably by exposure to UV light at 365 nm and/or 385 nm and/or 395 nm, emitted from a UV-LED light source. As known by the man skilled in the art, the UV-LED radically curable offset printing inks described herein could also be suitable for curing using medium-pressure mercury lamps.

The UV-LED radically curable offset printing ink described herein has a viscosity in the range of 2.5 to 25 Pa s at 40°C and 1000 $s^{-1}$; the viscosity values provided herein being measured on Haake Roto-Visco RV1 with a cone 2 cm 0.5°, linear speed increase 0-1000 $sec^{-1}$ in 30 seconds.

The UV-LED radically curable offset printing ink described herein comprises radically curable (meth)acrylate compounds. The radically curable (meth)acrylate compounds described herein are present in an amount from 10 wt.% to 80 wt.%, preferably from about 20 wt.% to about 80 wt.%, more preferably in an amount from about 30 wt.% to about 80 wt.%, still more preferably from about 50 wt.% to about 80 wt.%, the weight percents being based on the total weight of the UV-LED radically curable offset printing ink described herein.

Radically curable compounds are cured by free radical mechanisms consisting of the activation by energy of one or more photoinitiators which liberate free radicals which in turn initiate the polymerization so as to form a layer or coating.

The radically curable (meth)acrylate compounds described preferably consist of one or more radically curable (meth)acrylate oligomers and one or more radically curable (meth)acrylate monomers. The term "(meth)acrylate" in the context of the present invention refers to the acrylate as well as the corresponding methacrylate.

The radically curable (meth)acrylate oligomers described herein are selected from the group consisting of epoxy (meth)acrylates, (meth)acrylated oils, (meth)acrylated epoxidized oils, polyester (meth)acrylates, aliphatic or aromatic polyurethane (meth)acrylates, polyacrylic acid (meth)acrylates, polyacrylate esters (meth)acrylates and mixtures thereof, more preferably selected from the group consisting of epoxy (meth)acrylates, polyester (meth)acrylates, aliphatic or aromatic polyurethane (meth)acrylates and mixtures thereof.

The radically curable oligomers described herein are preferably (meth)acrylate oligomers which may be branched or essentially linear, and the (meth)acrylate functional group or groups, respectively, can be terminal groups and/or pendant side groups bonded to the oligomer backbone. Preferably, the radically curable oligomers are selected from the group consisting of (meth)acrylic oligomers, urethane (meth)acrylate oligomers, polyester (meth)acrylate oligomers, polyether based (meth)acrylate oligomers, epoxy (meth)acrylate oligomers and mixtures thereof, more preferably selected from the group consisting of polyester (meth)acrylate oligomers, epoxy (meth)acrylate oligomers and mixtures thereof.

Suitable examples of epoxy (meth)acrylate oligomers include without limitation aliphatic epoxy (meth)acrylate oligomers, in particular mono(meth)acrylates, di(meth)acrylates and tri(meth)acrylates, and aromatic epoxy (meth) acrylate oligomers. Suitable examples of aromatic epoxy (meth)acrylate oligomers include bisphenol-A (meth)acrylate oligomers such as bisphenol-A mono(meth)acrylates, bisphenol-A di(meth)acrylates and bisphenol-A tri(meth)acrylates as well as alkoxylated (such as for example ethoxylated and propoxylated) bisphenol-A (meth)acrylate oligomers such as for example alkoxylated bisphenol-A mono(meth)acrylates, alkoxylated bisphenol-A di(meth)acrylates and alkoxylated bisphenol-A tri(meth)acrylates, wherein ethoxylated bisphenol-A diacrylates are particularly suitable.

The radically curable (meth)acrylate monomers described herein are selected from the group consisting of mono(meth) acrylates, di(meth)acrylates, tri(meth)acrylates, tetra(meth)acrylates and mixtures thereof.

The mono(meth)acrylates are selected from 2(2-ethoxyethoxy)ethyl (meth)acrylate, 2-phenoxyethyl (meth)acrylate, C12/C14 alkyl (meth)acrylate, C16/C18 alkyl (meth)acrylate, caprolactone (meth)acrylate, cyclic trimethylolpropane formal (meth)acrylate, nonylphenol (meth)acrylate, isobornyl (meth)acrylate, isodecyl (meth)acrylate, lauryl (meth)acrylate, stearyl (meth)acrylate, octyldecyl (meth)acrylate, tridecyl (meth)acrylate, methoxy poly(ethylene glycol) (meth)acrylate, polypropylene glycol (meth)acrylate, tetrahydrofurfuryl (meth)acrylate, 1,3-butylene glycol di(meth) acrylate, 1,4-butanediol di(meth)acrylate, 1,6-hexanediol di(meth)acrylate, 3-methyl-1,5-pentanedioldi(meth)acrylate, alkoxylated di(meth)acrylate, esterdiol di(meth)acrylate as well as mixtures thereof.

The di(meth)acrylates are selected from bisphenol A di(meth)acrylates, alkoxylated (such as for example ethoxylated and propoxylated) bisphenol A di(meth)acrylate, bisphenol A diglycidyl ether di(meth)acrylate, ethylene glycol di(meth)acrylate, diethylene glycol di(meth)acrylate, triethylene glycol di(meth)acrylate, tetraethylene glycol di(meth)acrylate, dipropyleneglycol di(meth)acrylate, tripropylene glycol di(meth)acrylate, polyethylene glycol di(meth) acrylate, neopentyl glycol di(meth)acrylate, tricyclodecane dimethanol di(meth)acrylate as well as mixtures thereof.

The tri(meth)acrylates are selected from trimethylolpropane tri(meth)acrylates, alkoxylated (such as for example ethoxylated and propoxylated) trimethylolpropane tri(meth)acrylates, alkoxylated (such as for example ethoxylated and propoxylated) glycerol tri(meth)acrylates, pentaerythritol tri(meth)acrylates, alkoxylated pentaerythritol tri(meth)acrylates, alkoxylated (such as for example ethoxylated and propoxylated) pentaerythritol tri(meth)acrylates as well as mixtures thereof.

The tetra (meth)acrylates are selected from ditrimethylolpropane tetra(meth)acrylates, pentaerythritol tetra(meth)acrylates, alkoxylated (such as for example ethoxylated and propoxylated) pentaerythritol tetra(meth)acrylates and mixtures thereof, preferably selected from the group consisting of ditrimethylolpropane tetra(meth)acrylates, alkoxylated pentaerythritol tetra(meth)acrylates as well as mixtures thereof.

For embodiments wherein the UV-LED radically curable offset printing ink described herein is applied by a dry offset printing process, the UV-LED radically curable offset printing ink described herein comprising the (meth)acrylate compounds described herein may further comprise one or more vinyl ethers and/or their ethoxylated equivalents. Examples of preferred vinyl ethers include methyl vinyl ether, ethyl vinyl ether, n-propyl vinyl ether, n-butyl vinyl ether, isobutyl vinyl ether, ethylhexyl vinyl ether, octadecyl vinyl ether, dodecyl vinyl ether, isopropyl vinyl ether, tert-butyl vinyl ether, tert-amyl vinyl ether, cyclohexyl vinyl ether, cyclohexanedimethanol monovinyl ether, cyclohexanedimethanol divinyl ether, 4-(vinyloxy methyl)cyclohexylmethyl benzoate, phenyl vinyl ether, methylphenyl vinyl ether, methoxyphenyl vinyl ether, 2-chloroethyl vinyl ether, 2-hydroxyethyl vinyl ether, 4-hydroxybutyl vinyl ether, 1,6-hexanediol monovinyl ether, 3-amino-1-propanol vinyl ether, ethylene glycol divinyl ether, ethylene glycol monovinyl ether, 1,4-butanediol divinyl ether, 1,6-hexanediol divinyl ether, 4-(vinyloxy)butyl benzoate, bis[4-(vinyl oxy)butyl]adipate, bis[4-(vinyloxy)butyl]succinate, bis[4-(vinyloxymethyl)cyclohexylmethyl]glutarate, 4-(vinyloxy)butyl stearate, trimethylolpropane trivinyl ether, propenyl ether of propylene carbonate, diethylene glycol monovinyl ether, diethylene glycol divinyl ether, ethylene glycol butylvinyl ether, dipropylene glycol divinyl ether, triethylene glycol divinyl ether, triethylene glycol methyl vinyl ether, triethylene glycol monobutyl ether, tetraethylene glycol divinyl ether, poly(tetrahydrofuran) divinyl ether, polyethyleneglycol-520 methyl vinyl ether, pluriol-E200 divinyl ether, tris[4-(vinyloxy)butyl]trimellitate, bis[4-(vinyloxy)butyl]1,6-hexanediylbiscarbamate, 1,4-bis(2-vinyloxyethoxy)benzene, 2,2-bis(4-vinyloxyethoxyphenyl)propane, bis[4-(vinyloxy)methyl]cyclohexyl]methyl] terephthalate, bis[4-(vinyloxy)methyl]cyclohexyl]methyl] isophthalate, bis[4-(vinyloxy)butyl] (4-methyl-1,3-phenylene) biscarbamate, and bis[4-vinyloxy)butyl](methylenedi-4,1-phenylene) biscarbamate. Suitable vinyl ethers are commercially sold by BASF under the designation EVE, IBVE, DDVE, ODVE, BDDVE, DVE-2, DVE-3, CHVE, CHDM-di, HBVE. When present, the one or more vinyl ethers and/or their ethoxylated equivalents are present in an amount from about 1 wt.% to about 5 wt, the weight percents being based on the total weight of the UV-LED radically curable offset printing ink

The UV-LED radically curable offset printing ink described herein comprises the one or more photoinitiators described herein, said one or more photoinitiators consisting of thioxanthone derivatives linked to a residue via an ester bond on the position 2, i.e. the UV-LED radically curable offset printing ink described herein comprises one or more photoinitiators of formula (I):

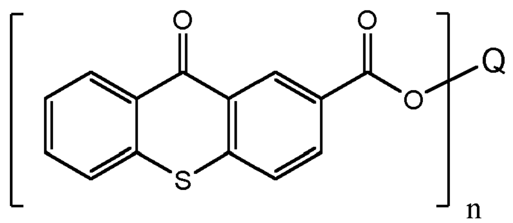

(I)

wherein Q has the following formula (IIa), (IIb) or (IIc):

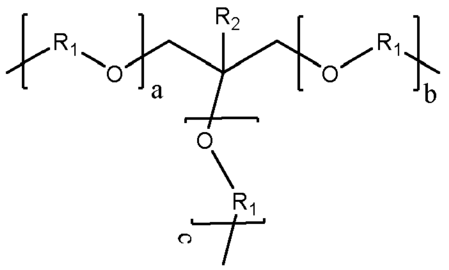

(IIa)

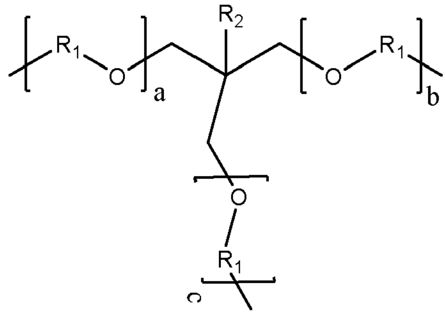

(IIb)

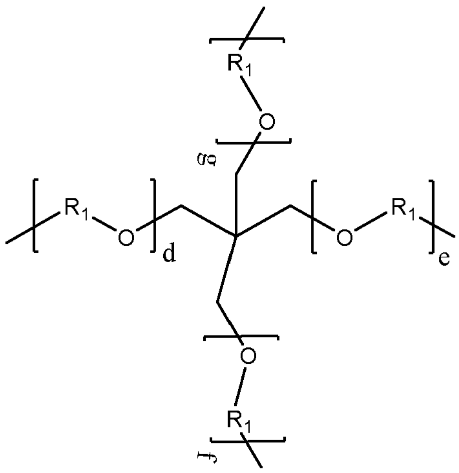

(IIc)

wherein n is bigger than 1, R1 are identical or different from each other and are selected from the group consisting of $C_1$-$C_3$-alkylene groups (i.e. methylene, ethylene, 1-propylene, 2-propylene, R2 are selected from the group consisting of hydrogen and $C_1$-$C_3$-alkyl groups (i.e. methyl (Me, $-CH_3$) , ethyl (Et, - $CH_2CH_3$), 1-propyl (n-Pr, n-propyl, $-CH_2CH_2CH_3$), 2-propyl (i-Pr, iso-propyl, $-CH(CH_3)_2$)), and wherein the sum a+b+c is between 3 and 12 and the sum d+e+f+g is between 4 and 16.

The one or more photoinitiators of formula (I) preferably have a weight average molecular weight (MW) higher than or equal to about 900 g/mol eq PS, wherein said weight average molecular weights are determined by GPC (gel permeation chromatography) according to the OECD test method 118, wherein a Malvern Viskotek GPCmax is used and wherein a calibration curve (log(molecular mass) = f(retention volume)) is established using six polystyrene standards (with molecular masses ranging from 472 to 512000 g/mol). The device is equipped with an isocratic pump, a degasser, an autosampler and a triple detector TDA 302 comprising a differential refractometer, a viscosimeter and a double-angle light scattering detector (7° and 90°). For this specific measurement, only the differential refractometer is used. Two columns Viskotek TM4008L (column length 30.0 cm, internal diameter 8.0 mm) were coupled in series. The stationary phase was made of a styrene-divinylbenzene copolymer with a particle size of 6 μm and a maximum pore size of 3000 Å. During the measurements, the temperature was fixed at 35°C and the samples contains10 mg/mL of the product to be analyzed and being dissolved in THF (Acros, 99.9%, anhydrous). As described in the Examples herebelow, the samples are independently injected at a rate of 1 ml/min. The molecular mass of the compound is calculated from the chromatogram as a polystyrene-equivalent weight average molecular weight (PS eq $M_W$), with a 95% confidence level and the average of three measurements of the same solution, using the following formula:

$$M_w = \frac{\sum_{i=1}^{n} H_i M_i}{\sum_{i=1}^{n} H_i}$$

where $H_i$ is the level of the detector signal from the baseline for the retention volume $V_i$, $M_i$ is the molecular weight of the polymer fraction at the retention volume $V_i$ *and n* Omnisec 5.12 as supplied with the device is used as a software.

According to a preferred embodiment, the UV-LED radically curable offset printing ink described herein

comprises the one or more photoinitiators of formula (I) wherein n is equal to 1, 2 or 3 and wherein Q has the formula (IIb) with the sum a+b+c being between 3 and 12. According to a more preferred embodiment, the UV-LED radically curable offset printing ink described herein comprises the one or more photoinitiators of formula (I) wherein n is equal to 1, 2 or 3 and wherein Q has the formula (IIb) with the sum a+b+c being between 3 and 12and R1 being identical and being an ethylene groups.

According to a still preferred embodiment, the UV-LED radically curable offset printing ink described herein comprises the one or more photoinitiators of formula (I) wherein n is equal to 1 (see formula IIb-1), 2 (see formula (IIb-2) or 3 (see formula (IIb-3) and wherein Q has the formula (IIb) with the sum a+b+c being between 3 and 12, R1 being identical and being ethylene groups and R2 being an ethyl group:

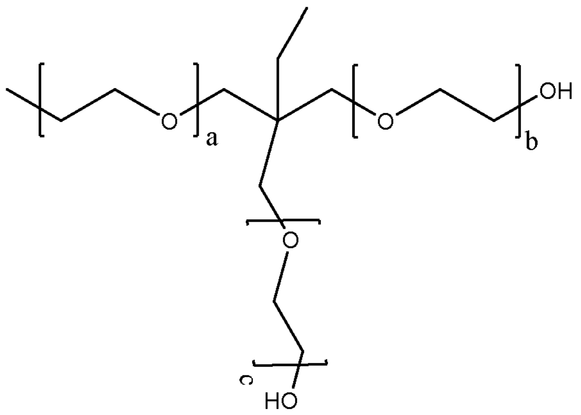

(IIb-1)

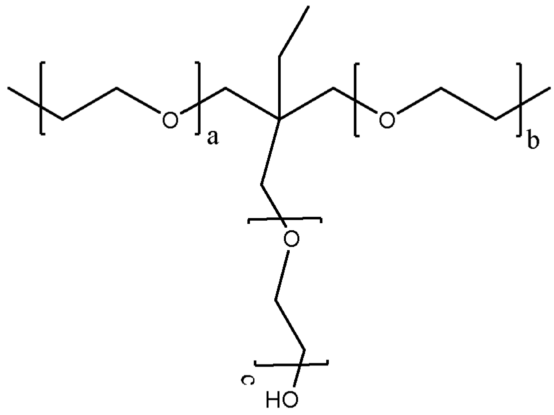

(IIb-2)

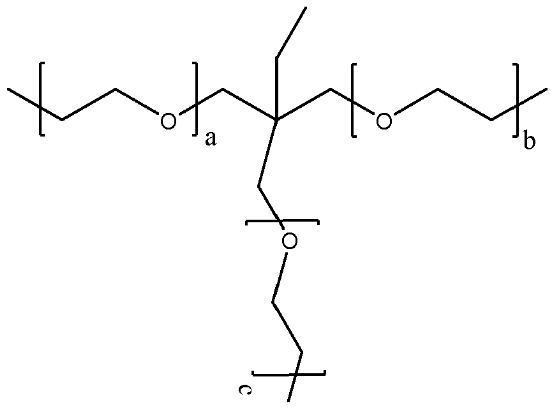

(IIb-3)

Particularly suitable photoinitiators of formula (I) are sold by Rahn under the designation Genopol® TX-2.

The one or more photoinitiators described herein are present in an amount from 4 wt.% to 20 wt.%, preferably in an amount from about 5 wt.% to about 15 wt.%, more preferably in an amount from about 8 wt.% to about 12 wt.%, the weight percents being based on the total weight of the UV-LED radically curable offset printing ink.

It should further be appreciated that the invention also extends to compounds in which one or more of the atoms have been replaced by an isotopic variant, such as for example one or more hydrogen atoms may be replaced by $^{2}H$ or $^{3}H$ and/or one or more carbon atoms may be replaced by $^{14}C$ or $^{13}C$.

The UV-LED radically curable offset printing ink described herein comprises from 1 wt.% to 15 wt.%, preferably about 2 wt.% to about 12 wt.%, of the one or more amino containing compounds selected from the group consisting of aminobenzoate compounds having a weight average molecular weight of at least 400 g/mol eq PS, amine modified polyether based acrylates having a weight average molecular weight of at least 400 g/mol eq PS and combinations thereof, wherein the weight average molecular weight is measured as described herein, the weight percents being based on the total weight of the UV-LED radically curable offset printing ink. Said amino containing compounds act as hydrogen donors. However, it is known in the art that, due to their rather high hydrophilicity, said compounds negatively impact the performance of the UV curable inks when wet offset processes are used (i.e. amines tend to make the normally oleophilic ink hydrophilic, said hydrophilic ink in turn contaminating the non-image area of the printing plate).

The one or more aminobenzoate compounds described herein have a weight average molecular weight of at least 400 g/mol eq PS, preferably at least 700 g/mol eq PS and more preferably at least 900 /mol eq PS.

According to one embodiment, the one or more aminobenzoate compounds described herein comprises one or more tertiary amines, preferably one or more 4-dialkylaminobenzoate groups, most preferably one or more 4-dimethylaminobenzoate groups. The one or more aminobenzoate compounds described herein are preferably polyether based compounds being derivatives from alkoxylated (such as for example ethoxylated and propoxylated) glycerols or alkoxylated (such as for example ethoxylated and propoxylated) pentaerythritols. Suitable examples of one or more aminobenzoate compounds have the following formula (III):

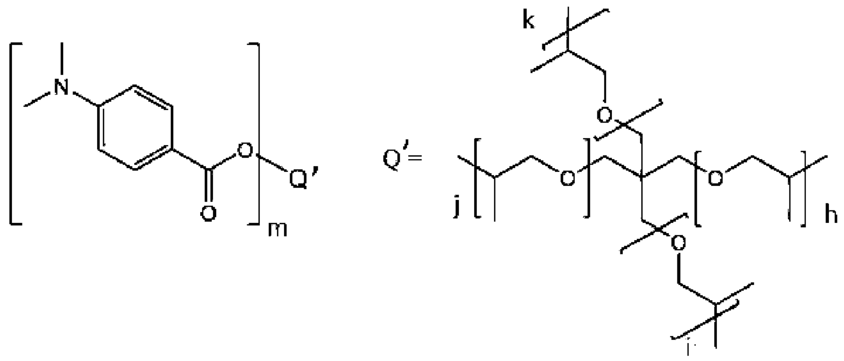

(III)

wherein m is bigger than 1, preferably between 1 and 4, and wherein the sum h+i+j+k is between 3 and 12.

Particularly suitable aminobenzoate compounds are sold by Lambson under the designation SpeedCure 7040.

The one or more amine modified polyether based acrylates described herein have a weight average molecular weight of at least 400 g/mol eq PS, preferably at least 700/mol eq PS and more preferably at least 900 g/mol eq PS. Preferably, the one or more amine modified polyether based acrylates described herein have a high viscosity (such as a viscosity value higher than 500 mPas, preferably higher than 1000 mPas at 20-25°C) and a high acrylate functionality (e.g. number of acrylate groups per molecule, in particular an acrylate functionality higher than 2, preferably higher than 3). According to one embodiment, the one or more amine modified polyether based acrylates described herein are prepared by the reaction of a small fraction (approximately 2-15 wt.%) of the acrylate double bonds of a polyether acrylate with an amine (Radiation curing, P. Glöckner, Vincentz, 2008, p. 66-67). Said amines are preferably primary or secondary alkyl or cycloalkyl amines, or aliphatic cyclic secondary amines such as pyrrolidine, piperidine or piperazine. Particularly suitable polyether acrylates have an acrylate functionality of at least 3. Corresponding examples include ethoxylated or propoxylated glycerol triacrylate, ethoxylated or propoxylated trimethylolpropane triacrylate, ethoxylated or propoxylated pentaerythritol tetraacrylate and the like. Suitable amine modified polyether based acrylates are sold by Allnex under the designation Ebecryl® 80), by Rahn under the designation Genomer* 3457 and 3480, by IGM Resins under the designation Photomer® 5662 and by DSM Resins under the designation Neorad™ P-82 and Agisyn™ 701.

The amount of the one or more amino containing compounds described herein (in particular of the one or more aminobenzoate compounds described herein and the one or more amine modified polyether based acrylates described herein) and the one or more photoinitiators of formula (I) described herein are preferably chosen so that the molar ratio between the nitrogen of the one or more amino containing compounds described herein (in particular of the one or more aminobenzoate compounds described herein and the one or more amine modified polyether based acrylates described herein) and the thioxanthone moiety of the one or more photoinitiators of formula (I) described herein is preferably comprised between about 0.1 and about 1, more preferably between about 0.2 and about 0.8, and even more preferably between about 0.4 and about 0.6. The preferred ranges described herein are particularly suitable for embodiments wherein the UV-LED radically curable offset printing ink described herein is applied by a wet offset printing process.

The UV-LED radically curable offset printing ink described herein further comprises the one or more inorganic pigments and/or one or more organic pigments described herein, wherein said one or more inorganic pigments and/or one or more organic pigments described herein are present in amount from 1 wt.% to 30 wt.%, the weight percents being based on the total weight of the UV-LED radically curable offset printing ink.

Typical examples of organic and inorganic pigments include without limitation C.I. Pigment Yellow 12, C.I. Pigment Yellow 42, C.I. Pigment Yellow 93, C.I. Pigment Yellow 110, C.I. Pigment Yellow 147, C.I. Pigment Yellow 173, C.I. Pigment Orange 34, C.I. Pigment Orange 48, C.I. Pigment Orange 49 , C.I. Pigment Orange 61, C.I. Pigment Orange 71 C.I. Pigment Orange 73, C.I. Pigment Red 9, C.I. Pigment Red 22, C.I. Pigment Red 23, C.I. Pigment Red 67, C.I. Pigment Red 122, C.I. Pigment Red 144, C.I. Pigment Red 146, C.I. Pigment Red 170, C.I. Pigment Red 177, C.I. Pigment Red 179,

C.I. Pigment Red 185, C.I. Pigment Red 202, C.I. Pigment Red 224, C.I. Pigment Brown 6, C.I. Pigment Brown 7, C.I. Pigment Red 242, C.I. Pigment Red 254, C.I. Pigment Red 264, C.I. Pigment Brown 23, C.I. Pigment Blue 15, C.I. Pigment Blue 15:3, C.I. Pigment Blue 60, C.I. Pigment Violet 19, C.I. Pigment Violet 23, C.I. Pigment Violet 32, C.I. Pigment Violet 37, C.I. Pigment Green 7, C.I. Pigment Green 36, C.I. Pigment Black 7, C.I. Pigment Black 11, C. I. Pigment White 4, C.I Pigment White 6, C.I. Pigment White 7, C.I. Pigment White 21, C. I. Pigment White 22, , antimony yellow, lead chromate, lead chromate sulfate, lead molybdate, ultramarine blue, cobalt blue, manganese blue, chrome oxide green, hydrated chrome oxide green, cobalt green, cerium sulfide, cadmium sulfide, cadmium sulfoselenides, zinc ferrite, bismuth vanadate, Prussian blue, ,mixed metal oxides, azo, azomethine, methine, anthraquinone, phthalocyanine, perinone, perylene, diketopyrrolopyrrole, thioindigo, thiazinindigo, dioxazine, iminoisoindoline, iminoisoindolinone, quinacridone, flavanthrone, indanthrone, anthrapyrimidine and quinophthalone pigments. When present, the inorganic pigments, organic pigments or mixtures thereof described herein are preferably present in an amount from about 0.1 wt.% to about 45 wt.%, the weight percents being based on the total weight of the UV-LED radically curable offset printing ink.

According to a preferred embodiment, the one or more inorganic pigments described herein and the one or more organic pigments described herein independently have a particle size of less than or equal to 5 μm, preferably less than or equal to 3 μm when measured using a granulometry gauge (such as Erichsen model 232 grindometer, scale 0-15 μm) according to ISO 1524:2013. The granulometry test is performed directly with the ready to be used ink, i.e. an ink that contains all ingredients and has been prepared and milled as described for Examples E1-E2 and comparative Examples C1-C4 described hereafter.

The UV-LED radically curable offset printing ink described herein further comprises one or more fillers and/or extenders in an amount from 0.5 wt.% to 10 wt.%, preferably from about 0.5 to about 5 wt.%, the weight percents being based on the total weight of the UV-LED radically curable offset printing ink. Preferably the one or more fillers and/or extenders are selected from the group consisting of carbon fibers, talcs, micas (muscovites), wollastonites, clays (calcinated clays and china clays), kaolins, carbonates (e.g. calcium carbonate, sodium aluminum carbonate), silicates (e.g. magnesium silicate, aluminum silicate), sulfates (e.g. magnesium sulfate, barium sulfate), titanates (e.g. potassium titanate), alumina hydrates, silica (also including fumed silicas), montmorillonites, graphites, anatases, rutiles, bentonites, vermiculites, zinc whites, zinc sulfides, wood flours, quartz flours, natural fibers, synthetic fibers and combinations thereof. More preferably, the one or more fillers and/or extenders are selected from the group consisting of carbon fibers, talcs, micas, wollastonites, clays, kaolins, carbonates, silicates, sulfates, titanates, alumina hydrates, silica, montmorillonites, graphites, bentonites, vermiculites, wood flours, quartz flours, natural fibers, synthetic fibers and combinations thereof. Still more preferably, the one or more fillers and/or extenders are selected from the group consisting of carbonates (e.g. calcium carbonate, sodium aluminum carbonate), silicas, talcs, clays and mixtures thereof.

The UV-LED radically curable offset printing ink described herein may further comprise one or more waxes preferably selected from the group consisting of synthetic waxes, petroleum waxes and natural waxes. Preferably the one or more waxes are selected from the group consisting of amide waxes, erucamide waxes, paraffin waxes, polyethylene waxes, polypropylene waxes, fluorocarbon waxes, polytetrafluoroethylene waxes, Fischer-Tropsch waxes, silicone fluids, bee waxes, candelilla waxes, montan waxes, carnauba waxes and mixtures thereof, more preferably selected from the group consisting of paraffin waxes, polyethylene waxes, fluorocarbon waxes, polytetrafluoroethylene waxes carnauba waxes and mixtures thereof. When present, the one or more waxes are preferably present in an amount from about 0.1 to about 5 wt.%, the weight percents being based on the total weight of the UV-LED radically curable offset printing ink.

The UV-LED radically curable offset printing ink described herein may further comprise one or more phosphine oxides as co-initiators. Suitable examples of phosphine oxides include without limitation 2,4,6-trimethylbenzoyldiphenylphosphine oxide; ethyl (2,4,6-trimethylbenzoyl)phenylphosphinate; phenylbis(2,4,6-trimethylbenzoyl)phosphine oxide; bis(2,6-dimethoxybenzoyl)-2,4,4-trimethylpentylphosphine oxide; substituted acyl-phosphine oxides sold as Speedcure XKm from Lambson; a mixture of diphenyl(2,4,6-trimethylbenzoyl)phosphine oxide and phenylbis(2,4,6-trimethylbenzoyl)phosphine oxide; a mixture of diphenyl(2,4,6-trimethylbenzoyl)phosphine oxide and 2-hydroxy-2-methylpropiophenone, a mixture of phenylbis(2,4,6-trimethylbenzoyl)phosphine oxide and 2-hydroxy-2-methylpropiophenone; and a mixture of ethyl(2,4,6-trimethylbenzoyl)phenylphosphinate and 2-hydroxy-2-methylpropiophenone. When comprising the one or more phosphine oxides described herein, the UV-LED radically curable offset printing preferably comprise from about 6 wt.% to about 25 wt.%, preferably about 10 wt.% to about 20 wt.% of the combination of the one or more photoinitiators of formula (I) described herein and the one or more phosphine oxides described herein, the weight percents being based on the total weight of the UV-LED radically curable offset printing ink.

The UV-LED radically curable offset printing ink described herein may further comprise one or more machine readable materials selected from the group consisting of magnetic materials, IR absorbing materials and mixtures thereof. As used herein, the term "machine readable material" refers to a material which exhibits at least one distinctive property which is detectable by a device or a machine, such as for example a CCD or CMOS sensor, a magnetic detector (when the machine readable materials have magnetic properties) or an IR-camera (when the machine readable materials have IR-absorbing properties), and which can be comprised in a security feature made from the UV-LED radically curable offset

printing ink described herein so as to confer a way to authenticate said security feature by the use of a particular equipment for its detection and/or authentication. The one or more machine readable materials described herein are present in an amount from about 1 wt.% to about 60 wt.%, preferably from about 5 wt.% to about 40 wt.%, the weight percents being based on the total weight of the UV-LED radically curable offset printing ink.

Magnetic materials exhibit particular, detectable magnetic properties of the ferromagnetic or ferrimagnetic type and include permanent magnetic materials (hard-magnetic materials with coercivity Hc > 1000 A/m) and magnetizable materials (soft-magnetic materials with coercivity Hc <= 1000 A/m according to IEC60404-1 (2000)). Typical examples of magnetic materials include iron, nickel, cobalt, manganese and their magnetic alloys, carbonyl iron, chromium dioxide $CrO_2$, magnetic iron oxides (e.g. $Fe_2O_3$; $Fe_3O_4$), magnetic ferrites $M(II)Fe(III)_2O_4$ and hexaferrites $M(II)Fe(III)_{12}O_{19}$, the magnetic garnets $M(III)_3Fe(III)_5O_{12}$ (such as Yttrium iron garnet $Y_3Fe_5O_{12}$) and their magnetic isostructural substitution products and particles with permanent magnetization (e.g. $CoFe_2O_4$). Magnetic pigments particles comprising a magnetic core material which is surrounded (coated) by at least one layer of another material such as those described in WO 2010/115986 A2 may also be used for the present invention. When present, the one or more magnetic materials are preferably present in an amount from about 5 to about 60 wt.%, the weight percents being based on the total weight of the UV-LED radically curable offset printing ink.

Infrared (IR) absorbing materials, i.e. materials absorbing in the near-infrared (NIR) range of the electromagnetic spectrum, most generally in the 700 nm to 2500 nm wavelength range, are widely known and used as marking materials in security applications to confer to the printed documents an additional, covert, security element which help their authentication. For example, security features having IR-absorbing properties have been implemented in banknotes for use by automatic currency processing equipment, in banking and vending applications (automatic teller machines, automatic vending machines, etc.), in order to recognize a determined currency bill and to verify its authenticity, in particular to discriminate it from replicas made by color copiers. IR absorbing materials include IR absorbing inorganic materials, glasses comprising substantial amounts of IR-absorbing atoms or ions or entities which display IR-absorption as a cooperative effect, IR absorbing organic materials and IR absorbing organometallic materials (complexes of cation(s) with organic ligand(s), wherein either the separate cation and/or the separate ligand, or both in conjunction, have IR-absorbing properties). Typical examples of IR absorbing materials include among others carbon black, quinone-diimmonium or aminium salts, polymethines (e.g. cyanines, squaraines, croconaines), phthalocyanine or naphthalocyanine type (IR-absorbing pi-system), dithiolenes, quaterrylene diimides, metal (e.g. transition metals or lanthanides) phosphates, lanthanum hexaboride, indium tin oxide, antimony tin oxide in nano-particulate form and doped tin(IV) oxide (cooperative property of the $SnO_4$ crystal). IR absorbing materials comprising a transition element compound and whose infrared absorption is a consequence of electronic transitions within the d-shell of transition element atoms or ions such as those described in WO 2007/060133 A2 may also be used for the present invention. When present, the one or more IR absorbing materials are preferably present in an amount from about 1 to about 40 wt.%, the weight percents being based on the total weight of the UV-LED radically curable offset printing ink.

The UV-LED radically curable offset printing ink described herein may further comprise one or more markers and/or taggants.

The UV-LED radically curable offset printing ink described herein may further comprise one or more UV-stabilizers in order to stabilize said ink in particular during its storage. Typical examples of suitable UV-stabilizers include without limitation, hydroquinone, hydroquinone monomethyl ether, 4-t-butylcatechol, 4-t-butyl-phenol, 2,6-di-t-butyl-4-methyl-phenol (BHT), pyrogallol, phenothiazine (PTZ), 2,4-diazabicyclo[2.2.2] octane (DABCO), copper (II) salts (such as e.g. copper (II) phenoxide, copper (II) acetylacetonate, copper (II) gluconate, copper (II) tartrate, copper (II) acetate, copper (II) carbamate, copper (II) thiocarbamate, copper (II) dithiocarbamate or copper (II) dimethyl dithiocarbamate), copper (I) salts (such as e.g. copper (I) chloride or copper (I) acetate), tris[N-(hydroxyl-κO)-N-(nitroso-κO)benzenaminato]-aluminum and mixtures thereof. When present, the one or more UV-stabilizers described herein are present in the UV-LED radically curable offset printing ink in an amount from about 0.1 wt.% to about 5 wt.%, preferably in an amount from about 0.5 wt.% to about 2 wt.%, the weight percents being based on the total weight of the UV-LED radically curable offset printing ink described herein.

As known by those skilled in the art, the UV-LED radically curable offset printing ink described herein may further comprise one or more solvents and/or diluents.

The UV-LED radically curable offset printing ink described herein may further comprise one or more inert resins (i.e. resins which do not take part in the polymerization reaction). Inert resins may be used to adjust the viscosity of the radically curable offset printing ink described herein, to lower the glass transition temperature of an ink layer prepared with the radically curable offset printing ink described herein, or to increase the adhesion of an ink layer prepared with the radically curable offset printing ink described herein The one or more inert resins are preferably selected from the group consisting of hydrocarbons (such as e.g. styrene based hydrocarbon resins), acrylics (such as e.g. acrylic copolymers), styrene allyl alcohols, phenolic resins, rosin-modified resins, ketonic resins, alkyd resins and mixtures thereof. When present, the one or more inert resins described herein are present in the UV-LED curable wet offset printing ink described herein in an amount from about 0.1 wt.% to about 10 wt.%, preferably in an amount from about 0.5 wt.% to about 2 wt.%, the

weight percents being based on the total weight of the UV-LED curable wet offset printing ink described herein.

The UV-LED radically curable offset printing ink described herein may further comprise additives that include, but are not limited to, one or more of the following components as well as combinations of these: co-initiators, anti-settling agents, anti-foaming agents, surfactants and other processing aids known in the field of offset inks. Additives described herein may be present in the UV-LED curable wet offset printing inks described herein in amounts and in forms known in the art, including in the form of so-called nano-materials where at least one of the dimensions of the particles is in the range of 1 to 1000 nm.

The UV-LED radically curable offset printing inks may be applied by the offset printing processes described herein for printing features on security documents at high speed, wherein said UV-LED curable offset printing inks exhibiting good curing properties and, after having been cured allows the production of printed features, wherein said printed features exhibit low or non-fluorescence. Advantageously, this allows ink manufacturers to take advantage of this background low or non-fluorescence so as to produce low or non-fluorescent inks and low or non-florescent printed features. Also described herein are compositions comprising the UV-LED radically curable offset printing ink described herein and one or more luminescent materials. By taking advantage of the low or non-fluorescence of the UV-LED radically curable offset printing inks, this allow to formulate compositions comprising the one or more luminescent materials described herein, wherein the luminescence characteristics of said compositions have been purposely and freely chosen since no masking or interference occurs between the UV-LED radically curable offset printing ink components and the incorporated luminescent materials. In other words, the UV-LED radically curable offset printing inks may be used to produce compositions and security features with targeted fluorescent properties (i.e. fluorescent properties that are predictable and not altered by the components/ingredients of the UV-LED radically curable offset printing ink itself). In other words, the combination in the UV-LED radically curable offset printing inks described herein of the one or more radically curable (meth)acrylate compounds described herein, the one or more photoinitiators of formula (I) described herein, the one or more amino containing compounds selected from the group consisting of the aminobenzoate compounds, the amine modified polyether based acrylates and combinations thereof described herein, the one or more inorganic pigments and/or one or more organic pigments described herein the one or more fillers and/or extenders and the optional additives described herein allows the production of low or non-fluorescent inks and low or non-fluorescent printed features per se or allows the production of compositions with one or more luminescent compounds and low or non-fluorescent printed security features with controlled and desired luminescent properties by incorporating the luminescent materials described herein, wherein the luminescent properties of said luminescent compounds is not substantially altered or masked by the UV-LED radically curable offset printing inks described herein. Furthermore, and due to the low or non-fluorescence of the UV-LED radically curable offset printing inks, the amount of the one or more luminescent materials described herein may be reduced thus decreasing the manufacture and production costs.

Typical examples of luminescent materials include without limitation inorganic pigments (such as inorganic host crystals or glasses doped with luminescent ions), organic and organometallic (complexes of luminescent ion(s) with organic ligand(s)) substances) compounds. When present, the one or more luminescent materials being inorganic pigments are preferably present in the compositing comprising the UV-LED radically curable offset printing ink described herein in an amount from about 1 to about 40 wt.%, the weight percents being based on the total weight of the composition described herein. When present, the one or more luminescent materials being organic compounds are preferably present in the compositing comprising the UV-LED radically curable offset printing ink described herein in an amount from about 1 to about 20 wt.%, the weight percents being based on the total weight of the composition described herein. Luminescent compounds can absorb certain types of energy acting upon them and subsequently emit at least partially this absorbed energy as electromagnetic radiation. Luminescent compounds are detected by exposing with a certain wavelength of light and analyzing the emitted light. Down-converting luminescent compounds absorb electromagnetic radiation at a higher frequency (shorter wavelength) and at least partially re-emit it at a lower frequency (longer wavelength). Up-converting luminescent compounds absorb electromagnetic radiation at a lower frequency and at least partially re-emit part of it at a higher frequency. Light emission of luminescent materials arises from excited states in atoms or molecules. The radiative decay of such excited states has a characteristic decay time, which depends on the material and can range from $10^{-9}$ seconds up to several hours. Both fluorescent and phosphorescent compounds are suitable for the present invention. In the case of phosphorescent compounds, measurement of decay characteristics may also be carried out and used as a machine-readable feature. Luminescent compounds in pigment form have been widely used in inks (see US 6 565 770, WO 2008/033059 A2 and WO 2008/092522 A1). Examples of luminescent compounds include among others sulphides, oxysulphides, phosphates, vanadates, *etc.* of non-luminescent cations, doped with at least one luminescent cation chosen from the group consisting of transition-metal and the rare-earth ions; rare earth oxysulfides and rare-earth metal complexes such as those described in WO 2009/005733 A2 or in US 7 108 742. Examples of inorganic compounds materials include without limitation $La_2O_2S$:Eu, $ZnSiO_4$:Mn, and $YVO_4$:Nd.

The UV-LED radically curable offset printing ink described herein is typically prepared by a method comprising a step of dispersing, mixing and/or milling all the ingredients described herein ,i.e. the one or more photoinitiators of formula (I) described herein, the one or more amino containing compounds described herein, the one or more inorganic pigments

and/or one or more organic pigments described herein, the one or more fillers and/or extenders described herein, the one or more waxes described herein when present, and the one or more additives when present in the presence of the (meth) acrylate compounds described herein, thus forming pasty compositions. The one or more photoinitiators described herein may be added to the ink either during the dispersing/mixing/milling step of all other ingredients or may be added at a later stage.

Also disclosed herein are intaglio printing inks (also called referred in the art as "engraved steel die" or "copper plate" printing inks) and letterpress printing inks comprising the ingredients described herein, in particular comprising i) the one or more photoinitiators of formula (I) described herein and ii) the one or more amino containing compounds selected from the group consisting of aminobenzoate compounds having a weight average molecular weight of at least 400 g/mol eq PS, amine modified polyether based acrylates having a weight average molecular weight of at least 400 g/mol eq PS and combinations thereof.

As described herein, the process for producing the printed feature described herein comprises a step a) of applying the UV-LED radically curable offset printing ink described herein by offset printing so as to form an ink layer, and b) of exposing the ink layer to UV light at a dose of at least 150 $mJ/cm^2$, preferably at least 200 $mJ/cm^2$, to cure said ink layer with a UV-LED source. As described hereafter, the dose may be measured using a UV Power Puck® II radiometer from EIT, Inc., U.S.A.

The UV-LED radically curable offset printing inks described herein are applied by an offset printing step, wherein said offset printing may be a wet printing process or a dry offset printing process.

Also described herein are processes wherein the UV-LED radically curable offset printing ink described herein is applied by the offset printing described herein on both sides of the substrate described herein so as to form ink layers on both sides, i.e. a same UV-LED radically curable offset printing ink is used for both sides. Also described herein are processes wherein two UV-LED radically curable offset printing inks described herein are applied by the offset printing described herein on both sides of the substrate described herein so as to form ink layers on both sides, i.e. two different UV-LED radically curable offset printing inks are used for both sides.

Preferably, the step b) described herein consists of exposing the ink layer to one or more wavelengths between 355 and 415 nm. Typically, commercially available UV-LED sources use one or more wavelengths such as for example 365 nm, 385 nm, 395 nm and 405 nm. According to one embodiment, the step b) described herein consists of exposing the ink layer to a single wavelength between 355 and 415 nm.

The process described herein is particularly suitable for producing one or more printed features on a substrate that is suitable as substrate for a security document. The one or more printed features described herein may be continuous or discontinuous.

According to embodiment, the one or more features described herein are used as background features or patterns on the substrate or security document (either on one side or on both sides) to be subsequently printed or processed with other inks or security features. This means that, on top of the one or more features printed by the offset printing process described herein with the UV-LED radically curable offset printing ink described herein, further features are printed or applied in one or more further printing or applying runs and the one or more features printed by the offset process described herein and the further features at least partially overlap. Fig. 1 depicts a front side of a security document, in particular a banknote, that comprises a non-fluorescent fiduciary substrate (1), such as a cellulose-based substrate or a polymer substrate, a background design (10) consisting of a printed feature prepared by applying and curing the UV-LED radically curable offset printing inks described herein by the offset printing step described herein and additional security elements (2-9). Said security elements (2-9) include without limitation a serial number (2) printed in letterpress, a security thread (3), a fluorescent or phosphorescent patch (4), an intaglio security feature (5), a transparent window (6), a numeral (7), fluorescent security fibers (8) and a printed luminescent security element (9). The fluorescent fibers (8) are included within the substrate during its preparation and the fluorescent or phosphorescent patch (4) may be either applied in a separate process or printed in a subsequent step. The printed luminescent security element (9) may be based on the composition described herein and comprising the UV-LED radically curable offset printing ink described herein and the one or more luminescent materials described herein and may be offset printed during the same printing step as the background design made of the UV-LED radically curable offset printing inks described herein.

According to one embodiment, the one or more printed features described herein and consisting of a cured ink layer made from the UV-LED radically curable offset printing ink described herein have a total surface (i.e. addition of the surface of all the one or more printed features described herein) which is larger than or equal to about 50%, preferably larger than or equal to about 60%, even more preferably larger than or equal to about 70%, the % being based on the total surface of the substrate onto which said one or more printed features are present. The one or more printed features may be applied on one side or on both sides of the substrate described herein. When both sides of the substrate comprise the one or more printed features described herein, the percents described herein, i.e. larger than or equal to about 50%, preferably larger than or equal to about 60%, even more preferably larger than or equal to about 70%, may be the same for both sides or may be different for both sides.

Typical examples of substrate include without limitation fiber-based substrates, preferably substrates based on

cellulosic fibers such as paper, paper-containing materials, polymer-based substrates, composite materials (e.g. substrates obtained by the lamination of paper layers and polymer films), metals or metalized materials, glasses, ceramics and combinations thereof. Typical examples of polymer-based substrates are substrates made of ethylene- or propylene-based homo- and copolymers such as polypropylene (PP) and polyethylene (PE), polycarbonate (PC), polyvinyl chloride (PVC) and polyethylene terephthalate (PET). As known by the man skilled in the art, polymer-based substrates do not exhibit fluorescence. Typical examples of composite materials include without limitation multilayer structures (e.g. laminates) of at least one paper layer and at least one polymer film, including polymers such as those described above, as well as paper-like substrates based on mixtures of cellulosic fibers and synthetic polymer fibers. In one preferred embodiment the features is printed on a substrate selected from offset papers and fiduciary papers. Offset paper is manufactured from wood-pulp cellulose with properties that make the paper suitable for offset printing, including dimensional stability, resistance to curling, high surface strength, a surface free from foreign particles and a high level of resistance to moisture penetration. Typically the basis weight of offset paper is of 30 $g/m^2$ to 250 $g/m^2$, preferably of 50 $g/m^2$ to 150 $g/m^2$.

Fiduciary paper (also referred in the art as security paper) is manufactured from lignin-free, cotton-pulp cellulose. Compared to offset papers, additional properties of fiduciary papers include enhanced mechanical resistance (especially resistance to tearing and wearing), resistance to soiling and treatment against degradation by micro-organisms (bacteria, virus and fungi). The mechanical resistance of fiduciary papers may be enhanced by the introduction into the paper (cotton-based) pulp of synthetic fibers, and the anti-soiling performance may be improved by coating or printing an anti-soil polymeric layer prior to printing or applying the features of the banknote. Usually, the treatment with biocides is combined with the anti-soil treatment. Typically, the fiduciary paper has a basis weight between 50 and 150 $g/m^2$, preferably between 80 and 120 $g/m^2$.

Furthermore, the use of fiduciary paper instead of offset paper adds an additional element of anti-counterfeiting protection, since fiduciary paper is manufactured on special paper-making machines that are only available to manufacturers of security paper, and since the supply chain is protected such as to prevent the fiduciary paper from being diverted to counterfeiters. To the contrary of ordinary writing papers, fiduciary papers do not contain optical brighteners. Said optical brighteners are used to confer a whiter, brighter appearance to ordinary writing papers, but at the same time exhibit a strong blue fluorescence when exposed to UV light, while fiduciary papers remain comparatively dark under similar irradiation. Papers devoid of optical brighteners are not available outside the security domain, which means that bright blue fluorescence under UV light is already a sign of counterfeit (Optical Document Security, Third Ed., 2005, Artech House, 3.2.5 p. 71).

According to one embodiment, the substrate described herein is a non-fluorescent substrate, preferably a non-fluorescent polymer-based substrate or a fiduciary paper lacking an optical brightener.

The term "security document" refers to a document having a value such as to render it potentially liable to attempts at counterfeiting or illegal reproduction and which is usually protected against counterfeit or fraud by one or more features. Examples of security documents include without limitation value documents and value commercial goods. Typical example of value documents include without limitation banknotes, deeds, tickets, checks, vouchers, fiscal stamps and tax labels, agreements and the like, identity documents such as passports, identity cards, visas, bank cards, credit cards, transactions cards, access documents, security badges, entrance tickets, transportation tickets or titles, and the like.

The term "value commercial good" refers to packaging material, in particular for pharmaceutical, cosmetics, electronics or food industry that may comprise one or more features in order to warrant that the content of the packaging is genuine, like for instance genuine drugs. Example of these packaging material include without limitation labels such as authentication brand labels, tax banderoles, tamper evidence labels and seals. The security document described herein may further comprise one or more additional layers or coatings either below or on top of the printed feature described herein. Should the adhesion between the substrate and the printed feature described herein and consisting of a cured ink layer made from the UV-LED radically curable offset printing ink described herein be insufficient, for example, due to the substrate material, a surface unevenness or a surface inhomogeneity, an additional layer, coating or a primer between the substrate and the printed feature might be applied as known for those skilled in the art.

With the aim of further increasing the security level and the resistance against counterfeiting and illegal reproduction of security documents, the substrate may contain watermarks, security threads, fibers, planchettes, luminescent compounds, windows, foils, decals, coatings and combinations thereof.

The substrate described herein, on which the UV-LED radically curable offset printing ink described herein is applied, may consist of an intrinsic part of a security document, or alternatively, the UV-LED radically curable offset printing ink described herein is applied onto an auxiliary substrate such as for example a security thread, security stripe, a foil, a decal or a label and consequently transferred to a security document in a separate step.

Also described herein are uses of the one or more photoinitiators described herein for producing the UV-LED radically curable offset printing ink described herein, said UV-LED radically curable offset printing ink being suitable for printing one or more features on a security document.

## EXAMPLE

The present invention is now described in more details with reference to non-limiting examples. The Examples below provide more details for the preparation of UV-LED radically curable printing inks and use of the photoinitiators and amino containing compounds according to the invention and comparative data.

**<u>Photoinitiators and amino containing compounds</u>**

Table 1A

| | Commercial Name (Supplier) | Structure, CAS No, and molecular weight | TX moiety / mmol/g |
|---|---|---|---|
| P1 | OMNIPOL TX (IGM Resins) | 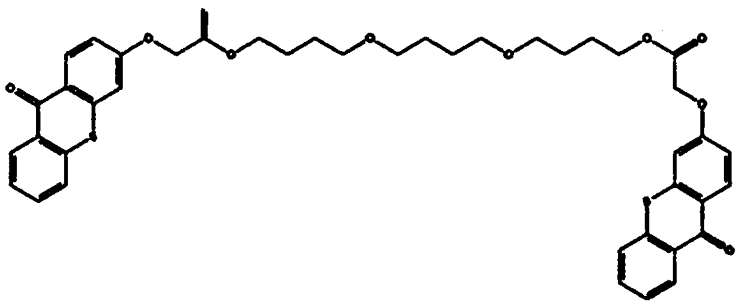<br>CAS No: 813452-37-8<br>761 ± 17 g/mol eq. PS | 2.40 |
| P2 | Genocure* ITX (Rahn) | 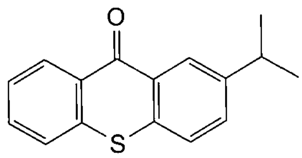<br>CAS No: 5495-84-1<br>254.35 (provided by the supplier) | 3.91 |
| P3 | Genopol® TX-2 (Rahn) | 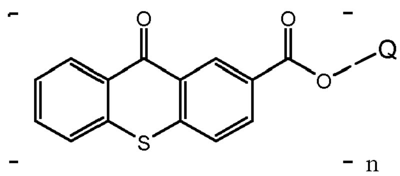<br>with n = 1 - 3<br>Q = 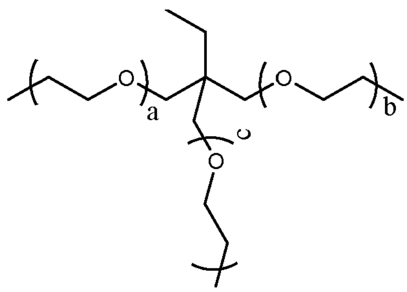<br>with a + b + c = 3 - 12<br>CAS No: not available<br>918 ± 12 g/mol eq. PS | 1.70 |

(continued)

| | Commercial Name (Supplier) | Structure, CAS No, and molecular weight | TX moiety / mmol/g |
|---|---|---|---|
| P4 | SPEEDCURE TPO-L (Lambson) | 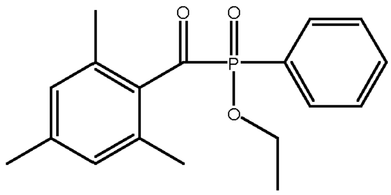 CAS No: 84434-11-7 316.34 (provided by the supplier) | -- |

<u>Thioxanthone moiety concentration in the photoinitiators P1-P3: determination by ED-XRF</u>

The thioxanthone moiety molar concentration was determined by ED-XRF (Spectro XEPOS) using the signal of the sulfur atom. For each of the photoinitiators P1-P3 of Table 1A, three 50 mL solutions at 2 mg/mL of the corresponding photoinitiator in acetonitrile (Sigma-Aldrich, 99.9%) were prepared. From each solution, 5 mL samples were collected and increasing amounts of a 5 mg/mL solution of Genocure ITX (Rahn, 99.3% according to certificate of analysis) in acetonitrile were added. Each sample was completed to 10 mL with acetonitrile. The following solutions have been obtained and are provided in Table 1B.

Table 1B

| Level | Solution P1-P3 [mL] | Solution ITX [mL] | Acetonitrile [mL] |
|---|---|---|---|
| 0 | 5 | 0 | 5 |
| 1 | 5 | 1 | 4 |
| 2 | 5 | 3 | 2 |
| 3 | 5 | 4 | 1 |

Each sample was independently submitted to an ED-XRF measurement (Spectro XEPOS) and a spectrum was recorded. A blank measurement (pure acetonitrile) was deduced from all spectra. For each series of samples (triplicate measurement), the measured fluorescence intensity at 2.31keV (S K$\alpha$1 peak) was displayed as a function of the concentration of the added ITX and a linear regression was performed. The x-intercept (abscissa at origin) of the regression line indicated the thioxanthone moiety concentration present at level 0 in each sample. Average values (average of three measurements) are provided in Table 1A. The corresponding average value was used to determine the thioxanthone concentration in each of the photoinitiators P1-P3 in mmol/g and to calculate the amount of photoinitiator P1-P3 to be added for the preparation of the examples and comparative examples.

Table 1C

| | Commercial Name (Supplier) | Structure, CAS No and molecular weight | Nitrogen / mmol/g |
|---|---|---|---|
| S1 | Genocure* EHA (Rahn) | 2-ethylhexyl 4-(dimethylamino)benzoate CAS No: 21245-02-3 277.4 (provided by the supplier) | 3.63 |
| S2 | Ebecryl® 80 (Allnex) | Mixture of active agent, 30% glycerol, propoxylated, esters with acrylic acid and 0.5% dipropyleneglycol diacrylate CAS No: 69.5% active ingredient (not available), 0.5% CAS No 57472-68-1 and 30% CAS No 52408-84-1 3’983 ± 226 (g/mol eq. PS) | 1.03 |

(continued)

| | Commercial Name (Supplier) | Structure, CAS No and molecular weight | Nitrogen / mmol/g |
|---|---|---|---|
| S3 | Speedcure 7040 (Lambson) | Mixture of 1,3-di({-4-(dimethylamino)benzoylpoly[oxy(1-methylethylene)]} oxy)-2,2-bis ({ -4- (dimethylamino)-benzoylpoly[oxy(1-methylethylene)]}oxymethyl) propane and{a-4(dimethylamino)benzoylpoly(oxyethylene)-poly [oxy(1-methylethylene)]-poly(oxyethylene)} 4-dimethyl-amino)benzoate<br>Mixture of CAS No: 1003567-84-7 and CAS No: 1003557-17-2 1’085 ± 20 (g/mol eq. PS) | 2.71 |

Nitrogen concentration of the amino containing compounds S1-S3: determination by potentiometric titration

The nitrogen molar concentration in the amino containing compounds S1-S3 of Table 1C was obtained by potentiometric titration with perchloric acid. For each compound S1-S3, three 50 mL samples at 3 mg/mL in dichloromethane (Acros, 99.99%) were prepared. 5 mL of each sample were transferred to a volumetric flask and completed to 50 mL with dichloromethane. These solutions were titrated with 0.01 M perchloric acid solution in glacial acetic acid, prepared by mixing 9 parts of glacial acetic acid (Sigma-Aldrich, 99%) and 1 part of a perchloric acid solution (Sigma-Aldrich, 0.1 mol/L in glacial acetic acid). Titration was performed using a Metrohm Titrando 905 equipped with un conductimeter 826 and a Solvotrode electrode for non-aqueous solutions (saturated LiCl in ethanol). The inflexion point was graphically determined. Average values (in mmol/g) of three measurements are provided in Table 1C.

Weight average molecular weight measurement

The weight average molecular weight of the photoinitiators P1 and P3 and the amino containing compounds S2 and S3 were independently determined by GPC (gel permeation chromatography) according to the method described below (based on the OECD test method 118):
a Malvern Viskotek GPCmax was used. The device was equipped with an isocratic pump, a degasser, an autosampler and a triple detector TDA 302 comprising a differential refractometer, a viscosimeter and a double-angle light scattering detector (7° and 90°). For this specific measurement, only the differential refractometer was used. A calibration curve (log(molecular mass) = f(retention volume)) was established using six polystyrene standards (with molecular masses ranging from 472 to 512000g/mol). Two columns Viskotek TM4008L (column length 30.0 cm, internal diameter 8.0 mm) were coup UV-LED in series. The stationary phase was made of a styrene-divinylbenzene copolymer with a particle size of 6 μm and a maximum pore size of 3000 Å. During the measurement, the temperature was fixed at 35°C. The analyzed samples contained 10 mg/mL of the investigated compounds dissolved in THF (Acros, 99.9%, anhydrous) and were injected at a rate of 1 mL/min. The molecular mass of the compounds was calculated from the chromatogram as a polystyrene-equivalent weight average molecular weight (PS eq MW), with a 95% confidence level and the average of three measurements of the same solution, using the following formula:

$$M_w = \frac{\sum_{i=1}^{n} H_i M_i}{\sum_{i=1}^{n} H_i}$$

where $H_i$ is the level of the detector signal from the baseline for the retention volume $V_i$, $M_i$ is the molecular weight of the compound fraction at the retention volume $V_i$ and $n$ is number of data points. Omnisec 5.12 as provided with the device was used as a software.

**UV-LED radically curable offset printing inks comprising color pigments and printed features obtained thereof (C1-C4 and E1-E2)**

Table 2A

| Ingredients | Commercial name (supplier) | Chemical name (CAS number) | C1 | C2 | C3 | C4 | E1 | E2 |
|---|---|---|---|---|---|---|---|---|
| Oligomer | Ebecryl® 811 (Allnex) | Polyester acrylate oligomer (24.4% active agent (CAS unknown) + 75% 94108-97-1 + 0.4% 15625-89-5 + 0.2% 150-76-5) | 35.28 | 36.75 | 37.06 | 41.05 | 33.57 | 36.51 |
| Oligomer | Ebecryl® 1606 (Allnex) | bisphenol A epoxy diacrylate diluted with TMPTA (74.7% 55818-57-0 + 25% 15625-89-5 + 0.3% 42978-66-5) | 21.6 | 22.5 | 22.69 | 25.13 | 20.55 | 22.35 |
| Oligomer | Ebecryl® 150 (Allnex) | ethoxylated bisphenol A diacrylate oligomer (CAS unknown) | 10.08 | 10.5 | 10.59 | 11.73 | 9.59 | 10.43 |
| Monomer | Miramer M4004 | Pentaerythritol ethoxylated tetraacrylate monomer (51728-26-8) | 2.52 | 2.63 | 2.65 | 2.93 | 2.40 | 2.61 |
| Pigments | Heliogen® Blue D7088 (BASF) | Pigment Blue 15:3 (147-14-8) with a particle size of 3-5 μm according to ISO1524:2013 | 10 | 10 | 10 | 10 | 10 | 10 |
| Filler | Finntalc M03 (Grolman) | Talc (97% 14807-96-6 + 1% 1318-59-8 + 1% 16389-88-1 + 1% 13717-00-5) | 0.36 | 0.38 | 0.38 | 0.42 | 0.34 | 0.37 |
| Filler | Aerosil® 200 (Evonik) | Fumed silica (7631-86-9) | 0.36 | 0.38 | 0.38 | 0.42 | 0.34 | 0.37 |
| Stabilizer | Florstab UV-1 (Kromatech) | Copper (II) dimethyldithiocarbamate solution (5% 137-29-1 + 55% 55818-57-0 + 40% 52408-84-1) | 1.08 | 1.13 | 1.13 | 1.26 | 1.03 | 1.12 |
| Wax | S394 N1 (Shamrock) | Polyethylene wax (8002-74-2) | 0.36 | 0.38 | 0.38 | 0.42 | 0.34 | 0.37 |
| Jellifying agent | Bentone® 34 (Elementis) | Organic derivative of a bentonite clay (97% 68953-58-2 + 3% 14808-60-7) | 0.36 | 0.38 | 0.38 | 0.42 | 0.34 | 0.37 |
| Photoinitiator | P1 | | 8 | | | | | |
| | P2 | | | 5 | | | | |
| | P3 | | | | 11.5 | | 11.5 | 11.5 |
| | P4 | | | | | 6.22 | | |

(continued)

| Ingredients | Commercial name (supplier) | Chemical name (CAS number) | C1 | C2 | C3 | C4 | E1 | E2 |
|---|---|---|---|---|---|---|---|---|
| Amine synergist | S1 | | | | 2.86 | | | |
| | S2 | | 10 | 10 | | | 10 | |
| | S3 | | | | | | | 4 |
| Viscosity [Pas] | | | 3.91 | 2.92 | 3.63 | 3.27 | 3.69 | 4.11 |
| Concentration of thioxanthone / mmol/g | | | 0.192 | 0.196 | 0.196 | | 0.196 | 0.196 |
| Concentration of amine / mmol/g | | | 0.103 | 0.103 | 0.104 | | 0.103 | 0.108 |
| Ratio amine/thioxanthone | | | 54% | 53% | 53% | | 53% | 55% |

**UV-LED radically curable offset printing inks comprising color pigments and luminescent pigments and printed features obtained thereof (C5-C8 and E3-E4)**

Table 2B

| Ingredients | Commercial name (supplier) | Chemical name (CAS number) | C5 | C6 | C7 | C8 | E3 | E4 |
|---|---|---|---|---|---|---|---|---|
| Oligomer | Ebecryl® 811 (Allnex) | Polyester acrylate oligomer (24.4% active agent (CAS unknown) + 75% 94108-97-1 + 0.4% 15625-89-5 + 0.2% 150-76-5) | 35.28 | 35.28 | 41.05 | 41.05 | 33.57 | 33.57 |
| Oligomer | Ebecryl® 1606 (Allnex) | bisphenol A epoxy diacrylate diluted with TMPTA (74.7% 55818-57-0 + 25% 15625-89-5 + 0.3% 42978-66-5) | 21.60 | 21.60 | 25.13 | 25.13 | 20.55 | 20.55 |
| Oligomer | Ebecryl® 150 (Allnex) | ethoxylated bisphenol A diacrylate oligomer (CAS not available) | 10.08 | 10.08 | 11.73 | 11.73 | 9.59 | 9.59 |
| Monomer | Miramer M4004 | Pentaerythritol ethoxylated tetraacrylate monomer (51728-26-8) | 2.52 | 2.52 | 2.93 | 2.93 | 2.40 | 2.40 |
| Colored pigment | Heliogen® Blue D7088 (BASF) | Pigment Blue 15:3 (147-14-8) with a particle size of 3-5 μm according to ISO1524:2013 | 5 | 5 | 5 | 5 | 5 | 5 |

(continued)

| Ingredients | Commercial name (supplier) | Chemical name (CAS number) | C5 | C6 | C7 | C8 | E3 | E4 |
|---|---|---|---|---|---|---|---|---|
| Luminescent pigment | RADGLO VSFX02 UV GREEN (Radiant Colors) | 2-(2-hydroxyphenyl)-4(3H)-Quinazolinone (1026-04-6) with a particle < 3 $\mu$m according to laser diffraction method | 5 | | 5 | | 5 | |
| | LUMILUX GREEN CD 140 FS 52155 (Honeywell) | ZnS:Cu (CAS not available) with particle size of 1.5 $\mu$m according to Coulter Lasersizer 230 | | 5 | | 5 | | 5 |
| Filler | Finntalc M03 (Grolman) | Talc (97% 14807-96-6 + 1% 1318-59-8 + 1% 16389-88-1 + 1% 13717-00-5) | 0.36 | 0.36 | | | | |
| Filler | Aerosil® 200 (Evonik) | Fumed silica (7631-86-9) | 0.36 | 0.36 | | | | |
| Stabilizer | Florstab UV-1 (Kromatech) | copper (II) dimethyldithiocarbamate solution (5% 137-29-1 + 55% 55818-57-0 + 40% 52408-84-1) | 1.08 | 1.08 | | | | |
| Wax | S394 N1 (Shamrock) | Polyethylene wax (8002-74-2) | 0.36 | 0.36 | | | | |
| Jellifying agent | Bentone® 34 (Elementis) | organic derivative of a bentonite clay (97% 68953-58-2 + 3% 14808-60-7) | 0.36 | 0.36 | | | | |
| Photoinitiator | P1 | | 8 | 8 | | | | |
| | P3 | | | | | | 11.5 | 11.5 |
| | P4 | | | | 6.22 | 6.22 | | |
| Amine synergist | S2 | | 10 | 10 | | | 10 | 10 |
| Viscosity [Pas] | | | 4.1 | 3.77 | 3.19 | 2.95 | 3.62 | 3.35 |
| Concentration of thioxanthone / mmol/g | | | 0.192 | 0.192 | | | 0.196 | 0.196 |
| Concentration of amine / mmol/g | | | 0.103 | 0.103 | | | 0.103 | 0.103 |
| Ratio amine/thioxanthone | | | 54% | 54% | | | 53% | 53% |

The UV-LED radically curable offset printing inks of Table 2A were prepared to assess the efficiency of the photoinitiators P1-P4 (Table 1A) and of the amine synergists S1-S3 (Table 1C) to cure layers printed with said inks, as well as to evaluate their influence on the residual fluorescence of the printed and cured layers.

The UV-LED radically curable offset printing inks of Table 2B were prepared to assess the efficiency of the photoinitiators P1, P3 and P4 (Table 1A) and of the amine synergists S2 (Table 1C) to cure layers printed with said inks, as well as to evaluate their influence on the measured luminescence of the printed and cured layers containing either a fluorescent pigment (RADGLO VSFX02 UV GREEN) or a phosphorescent pigment (LUMILUX GREEN CD 140 FS 52155 (Honeywell)). The aim was to establish whether the residual fluorescence of the printed and cured layers due to the presence of the photoinitiator (P1, P3 and P4, Table 1A) detrimentally affects the luminescence signals of the luminescent

pigments.

The UV-LED radically curable offset printing inks of Tables 2A-B were independently prepared by mixing with the SpeedMixer™ (DAC 150 SP CM31 from Hauschild Engineering) at room temperature the ingredients listed in Tables 2A-B, except the photoinitiators P1-P4. The resulting pastes were independently ground on a SDY300 three roll mill in three passes (a first pass at a pressure of 5 bars, a second and a third pass at a pressure of 11 bars).

The photoinitiators P1-P4 were independently added to the so-obtained pastes and the so-obtained inks were mixed in a SpeedMixer™ (DAC 150 SP CM31 from Hauschild Engineering) at a speed of 2500 rpm for three minutes at room temperature, ground on a Loher mill (3 x 50 turns with a weight of 7.5 kg) and mixed again with the SpeedMixer™ for three minutes.

The viscosity values of the UV-LED radically curable offset printing inks of Tables 2A-B were independently measured at 40°C and 1000 $s^{-1}$ on a Haake Roto-Visco RV1 with a cone 2 cm 0.5°, linear speed increase 0-1000 $sec^{-1}$ in 30 seconds and are provided in Tables 2A-B .

<u>Curing efficiency</u>

The UV-LED radically curable offset printing inks of Tables 2A-B were independently printed as a feature (4.5 cm x 23 cm) on a fiduciary polymer substrate (Guardian™, CCL Secure) using a Prüfbau at a pressure of 1000 N (T = 22°C, relative humidity = 54%).

The obtained printed layers were independently cured with a UV-LED-UV lamp (LUV3 385 nm, IST) at a dose of about 200 $mJ/cm^2$. The irradiation dose was determined with the following details: the irradiation source (LUV3 385 nm, IST) was turned on. A Power Puck® II radiometer (EIT, Inc., U.S.A) was placed on the conveyor belt of the irradiation apparatus designed to receive the samples to be irradiated. The Power Puck®, equipped with fours filters (UVA, UVB, UVC and UVA2) was irradiated with the irradiation source at different belt speeds. Only the dose obtained in the UVA2 domain was retained. The conveyor belt speed to obtain an irradiation of about 200 $mJ/cm^2$ was determined to be about 36 m/min (average of two measured values).

The printed features were cured at 36 m/min (corresponding to a dose of about 200 $mJ/cm^2$) using the UV-LED-UV lamp (LUV3 385 nm, IST). The exact amount of the printed and cured layers was calculated for each sample by weighting the substrate before and after printing and curing. The weight of the printed and cured layers of all the printed features was 1 $g/m^2$ ± 3%.

For each sample, a curing test was carried out by placing a piece of blank substrate (i.e. an unprinted substrate) on the front side of the substrate carrying the printed and cured layer and by submitting the so-formed assembly to a counter-pressure of 3.4 bars at 65°C with an ORMAG Intaglio Proof Press. The substrate carrying the printed and cured layer and the blank substrate were separated and the optical density of the blank substrate was checked for ink transfer (set-off). Two blanks were prepared to define the two possible extremes of the curing behavior. A first blank to define the maximal efficiency (100% curing efficiency) was obtained by measuring the optical density of a sample of unprinted substrate, whereas the minimal efficiency (0% curing efficiency) was defined by measuring the optical density of a sample obtained by counterpressure of a fully uncured ink layer (no pass under the UV-LED-UV lamp) directly after printing. The maximal optical density (corresponding to a curing efficiency of 0%) was defined as $OD_{max}$, whereas the minimal optical density (corresponding to a curing efficiency of 100%) was defined as $OD_{min}$. The actual curing efficiency (curing efficiency for each sample in %) was defined as OD, and was calculated as

$$Curing\ efficiency\ (\%) = \frac{OD_{max} - OD}{OD_{max} - OD_{min}} \cdot 100$$

Table 3 provides the curing efficiency results of the printed layer obtained with the UV-LED radically curable offset printing inks of Tables 2A-B.

Table 3

| Radiation dose | C1 | C2 | C3 | C4 | C5 | C6 | C7 | C8 | E1 | E2 | E3 | E4 |
|---|---|---|---|---|---|---|---|---|---|---|---|---|
| 200 $mJ/cm^2$ | 93% | 95% | 85% | 44% | 86% | 85% | 51% | 49% | 95% | 96% | 95% | 92% |

As shown in Table 3, the comparative offset printing ink 4, 7 and 8 (C4, C7 and C8) comprising a phosphine oxide as photoinitiator suffered from a very poor curing performance.

As shown in Table 3, the comparative offset printing ink 3 (C3) comprising a thioxanthone photoinitiator of formula (I) and having a weight average molecular weight (MW) higher than 900 g/mol eq PS but comprising a benzoate compound as amino containing compound having a molecular weight lower than 400 g/mol eq PS (in particular a molecular weight of

277.4 as provided by the supplier) suffered from a medium curing performance.

As shown in Table 3, the comparative offset printing inks 1, 2, 5 and 6 (C1, C2, C5 and C6), i.e. inks comprising a thioxanthone photoinitiator of a formula (I) different from formula (I) and having a weight average molecular weight (MW) smaller than 900 g/mol eq PS and comprising an amine modified polyether based acrylates compound as amino containing compound having a molecular weight higher than 400 g/mol eq PS (in particular about 4000 g/mol eq PS) exhibited medium or good curing performances, whereas the offset printing inks according to the invention (E1-E4), i.e. inks comprising a thioxanthone photoinitiator of formula (I) and having a weight average molecular weight (MW) higher than 900 g/mol eq PS and comprising either an amine modified polyether based acrylates compound as amino containing compound having a molecular weight higher than 400 g/mol eq PS (in particular about 4000 g/mol eq PS) or a benzoate compound as amino containing compound having a molecular weight higher than 400 g/mol eq PS (in particular about 1000 g/mol eq PS) exhibited good curing performance.

Fluorescence measurements

The UV-LED radically curable offset printing inks of Tables 2A-B were independently printed as a printed feature (4.5 cm x 23 cm) on a fiduciary cotton substrate (BNP paper from Louisenthal, 100 $g/m^2$) on a Prüfbau at 800 N. The obtained printed layers were independently cured with the UV-LED-UV lamp (LUV3 385 nm, IST) at a dose of 200 $mJ/cm^2$ (36 m/min). The exact amount of the printed and cured layers was calculated for each sample by weighting the substrate before and after printing and curing. The weight of the printed and cured layers of all the printed features was 2 $g/m^2 \pm 3\%$.

The fluorescence of the printed and cured layers made of the inks of Tables 2A-B was assessed using the method as described hereafter. The results of the fluorescence tests are presented in Tables 4A-B.

Fluorescence of the front side (C1-C8 and E1-E4)

The residual fluorescence of the printed and cured layers was assessed using a Fluorolog II (Spex) device at 254 nm and 365 nm, using the following parameters:

- Detector: R928/0115/0381
- Angle: 30°
- Position: front face
- Excitation slit: 2 nm (254 nm) and 1.2 nm (365 nm)
- Covered wavelength: 400-700 nm (increment 1 nm)
- Detection slit: 1 nm (254 nm) and 0.6nm (365 nm).

The fluorescence spectrum of a piece of blank substrate (i.e. an unprinted substrate) was first measured. The fluorescence spectrum of the printed and cured layers was subsequently recorded. From the obtained spectrum, the intensity maximum of fluorescence was determined, the fluorescence of the blank substrate at the same wavelength was deduced and the obtained value was reported with the corresponding wavelength. This corresponds to the maximum fluorescence of the front side (printed side).

The front side luminescence of the printed and cured layers made of the inks of Table 2B was assessed in order to determine the influence of the residual fluorescence of the printed and cured layer on the intrinsic luminescence intensity of the added luminescent compound. A CAMAG UV Cabinet 4 (equipped with two UV tubes at 254 nm and 366 nm, 8 W each) was used to observe with the naked eye the perceived color of the printed and cured security features. The measured luminescence intensity and the observed color are reported in Table 4B.

Fluorescence of the back side (C1-C4 and E1-E2)

Each of the printed and cured layers was placed against a piece of equal size of a blank substrate (i.e. an unprinted substrate) such that the printed face ("front side" face in Table 4) was in contact with the blank substrate. Both pieces were maintained between two glass plates (20 cm x 15 cm x 3 mm) and this assembly was put horizontally in an oven at 60°C and 50% relative humidity for 72 hours. Then, two fluorescence measurements were performed as described herein:

fluorescence of the back side of the printed layer: the result (average of three measurements at three different places of the back side) is noted "back of printed sample" in Table 4;

fluorescence of the back side of the unprinted sample: the result (average of three measurements at three different places of the back side) is noted "back of unprinted sample" in Table 4 and is indicative of the transfer of fluorescent compounds from the printed layer of one sheet to the back side of the sheet placed upon it.

In all cases, the fluorescence spectrum of a blank substrate (i.e. an unprinted substrate) was first measured and the result deduced from the fluorescence of the printed and cured layers.

Table 4A

| Excitation wavelength | | C1 | C2 | C3 | C4 | E1 | E2 |
|---|---|---|---|---|---|---|---|
| 254 nm | Front side | 2.5E+06 [a)] (519%) | 4.8E+05 (ref.) | 1.7E+05 (36%) | 7.5E+04 (16%) | 2.0E+05 (42%) | 1.6E+05 (34%) |
| | Back of printed sample | 1.2E+05 (13%) | 9.4E+05 (ref.) | 1.4E+05 (14%) | 1.0E+05 (11%) | 1.3E+05 (13%) | 1.0E+05 (11%) |
| | Back of unprinted sample | 1.8E+05 (14%) | 1.2E+06 (ref.) | 1.6E+05 (13%) | 1.3E+05 (10%) | 1.8E+05 (15%) | 1.4E+05 (12%) |
| 365 nm | Front | 9.6E+05 (340%) | 2.8E+05 (ref.) | 1.3E+05 (47%) | 5.6E+04 (20%) | 1.6E+05 (56%) | 1.2E+05 (42%) |
| | Back of printed sample | 3.6E+05 (56%) | 6.5E+05 (ref.) | 2.4E+05 (37%) | 2.5E+05 (39%) | 2.6E+05 (40%) | 2.2E+05 (33%) |
| | Back of unprinted sample | 4.1E+05 (49%) | 8.3E+05 (ref) | 2.7E+05 (33%) | 2.3E+05 (28%) | 3.1E+05 (37%) | 2.5E+05 (30%) |
| Wavelength of maximum fluorescence intensity / nm [b)] | | 448 | 442 | 444 | 443 | 442 | 447 |

a) absolute values are given in photons/second; values in brackets are relative to the fluorescence intensity of comparative example C2 (ITX), used as reference (ref. = 100%),
b) upon excitation at 365 nm.

Table 4B

| Excitation wavelength | | C5 | C6 | C7 | C8 | E3 | E4 |
|---|---|---|---|---|---|---|---|
| 254 nm | Luminescence intensity[a)] | 4.9E+06 (100%) | 5.0E+06 (100%) | 1.7E+06 (35%) | 4.3E+05 (9%) | 1.4E+06 (29%) | 3.8E+05 (8%) |
| | Perceived color | Blue | Blue | Green | Green | Green | Green |
| 365 nm | Luminescence intensity[a)] | 1.2E+06 (100%) | 5.8E+05 (100%) | 9.4E+05 (78%) | 4.7E+04 (8%) | 8.5E+05 (71%) | 6.9E+04 (12%) |
| | Perceived color | Blue | Blue | Green | Green | Green | Green |

a) absolute values are given in photons/second; values in brackets are relative to the luminescence intensity of comparative example C5 resp. C6 (photoinitiator P1), used as references (ref. = 100%)

As shown in Table 4A, the printed feature made of the comparative offset printing ink 4 (C4) comprising a phosphine oxide as photoinitiator exhibited very low fluorescence on the front and back sides.

As shown in Table 4A, the printed feature made of the comparative offset printing ink 3 (C3) comprising a thioxanthone photoinitiator of formula (I) but comprising a benzoate compound as amino containing compound having a molecular weight lower than 400 g/mol eq PS (in particular a molecular weight of 277.4 as provided by the supplier) exhibited low fluorescence.

As shown in Table 4A, the printed feature made of the comparative offset printing inks 1 and 2 (C1 and C2), i.e. inks comprising a thioxanthone photoinitiator of a formula (I) different from formula (I) and having a weight average

molecular weight (MW) smaller 900 g/mol eq PS and comprising an amine modified polyether based acrylate as compound amino containing compound having a molecular weight higher than 400 g/mol eq PS (in particular about 4000 g/mol eq PS) exhibited a strong fluorescence on the front side thus rendering them not suitable. As shown in Table 4A, the printed feature made of comparative offset printing ink 2 (C2), i.e. ink comprising a thioxanthone photoinitiator of a formula (I) different from formula (I) and having a weight average molecular weight (MW) smaller 900 g/mol eq PS and comprising an amine modified polyether based acrylate as compound amino containing compound having a molecular weight higher than 400 g/mol eq PS (in particular about 4000 g/mol eq PS) exhibited strong fluorescence not only of the front and back sides of the printed feature but also on the back side of the blank substrate (unprinted substrate).

As shown in Table 4A, the printed feature made of the offset printing inks according to the invention (E1 and E2), i.e. inks comprising a thioxanthone photoinitiator of formula (I) and having a weight average molecular weight (MW) higher than 900 g/mol eq PS and comprising either an amine modified polyether based acrylates compound amino containing compound having a molecular weight higher than 400 g/mol eq PS (in particular about 4000 g/mol eq PS) or a benzoate compound as amino containing compound having a molecular weight higher than 400 g/mol eq PS (in particular about 1000 g/mol eq PS) exhibited low fluorescence on the front and back sides.

As shown in Tables 3 and 4A, the UV-LED radically curable offset printing inks according to the present invention (E1 and E2) combined good curing performance and allowed the production of features exhibiting low fluorescence on their front and back sides whereas the comparative inks either suffered from very poor or poor curing performance or provides features suffering from fluorescence.

As shown in Table 4B, the luminescent printed feature made of the comparative offset printing inks C7 and C8 (containing a phosphine oxide photoinitiator) exhibited a strong green luminescence signal of the added luminescent compounds (C7: fluorescent pigment; C8: phosphorescent pigment). In other words, the blue residual fluorescence of the printed and cured layer obtained from an ink containing a phosphine oxide photoinitiator did not negatively affect the signal of the added luminescent pigments.

As shown in Table 4B, the luminescent printed feature made of the comparative offset printing inks C5 and C6 (comprising a thioxanthone having a structure different from formula (I) and having a weight average molecular weight (MW) smaller than 900 g/mol eq PS and comprising an amine modified polyether based acrylate compound having a molecular weight higher than 400 g/mol eq PS (in particular about 4000 g/mol eq PS)) exhibited a blue luminescence signal essentially coming from the strong residual fluorescence of the printed and cured layer. In other words the green luminescence signal coming from the added luminescent compounds (C5: fluorescent pigment; C6: phosphorescent pigment) was hidden by the strong residual fluorescence of the printed and cured layers, making the luminescence signal of the added luminescent compounds very difficult to detect.

As shown in Table 4B, the luminescent printed feature made of offset printing inks according to the invention (E3 and E4), i.e. inks comprising a thioxanthone photoinitiator of formula (I) and having a weight average molecular weight (MW) smaller 900 g/mol eq PS and comprising an amine modified polyether based acrylate compound having a molecular weight higher than 400 g/mol eq PS (in particular about 4000 g/mol eq PS)) exhibited a strong green luminescence signal of the added luminescent compounds (E3: fluorescent pigment, E4: phosphorescent pigment). In other words, the blue residual fluorescence of the printed and cured layers obtained from an ink comprising a thioxanthone photoinitiator having a structure according to formula (I) and having a weight average molecular weight (MW) smaller than 900g/mol eq PS did not negatively affect the signal of the added luminescent pigments.

As shown in Tables 3 and 4B, the UV-LED radically curable offset printing inks according to the present invention (E3 and E4) combined good curing performance and allowed the production of luminescent security features exhibiting strong luminescent signals from the added luminescent (fluorescent or phosphorescent) pigments, whereas the comparative inks (C5-C8) either suffered from poor curing performance or provided luminescent security features suffering from strong residual fluorescence of the printed and cured layers, making the intrinsic luminescence signals of the added luminescent pigments very difficult to correctly detect.

## Claims

**1.** A UV-LED radically curable offset printing ink having a viscosity in the range of 2.5 to 25 Pa s at 40°C and 1000 $s^{-1}$ for offset printing a feature on a substrate, said UV-LED radically curable offset printing ink comprising:

i) from 10 wt.% to 80 wt.% of radically curable (meth)acrylate compounds consisting of one or more radically curable (meth)acrylate oligomers and one or more radically curable (meth)acrylate monomers,

said radically curable (meth)acrylate oligomers being selected from the group consisting of epoxy (meth) acrylates, (meth)acrylated oils, (meth)acrylated epoxidized oils, polyester (meth)acrylates, aliphatic or aromatic polyurethane (meth)acrylates, polyacrylic acid (meth)acrylates, polyacrylate esters (meth)acrylates and mixtures thereof, more preferably selected from the group consisting of epoxy (meth)acrylates, polyester (meth)acrylates, aliphatic or aromatic polyurethane (meth)acrylates and mixtures thereof, and said radically curable (meth)acrylate monomers being selected from the group consisting of mono(meth) acrylates, di(meth)acrylates, tri(meth)acrylates, tetra(meth)acrylates, as well as mixtures thereof,

wherein the mono(meth)acrylates are selected from 2(2-ethoxyethoxy)ethyl (meth)acrylate, 2-phenoxyethyl (meth)acrylate, C12/C14 alkyl (meth)acrylate, C16/C18 alkyl (meth)acrylate, caprolactone (meth) acrylate, cyclic trimethylolpropane formal (meth)acrylate, nonylphenol (meth)acrylate, isobornyl (meth) acrylate, isodecyl (meth)acrylate, lauryl (meth)acrylate, stearyl (meth)acrylate, octyldecyl (meth)acrylate, tridecyl (meth)acrylate, methoxy poly(ethylene glycol) (meth)acrylate, polypropylene glycol (meth) acrylate, tetrahydrofurfuryl (meth)acrylate, as well as mixtures thereof,
wherein the di(meth)acrylates are selected from (a) bisphenol A di(meth)acrylates, alkoxylated bisphenol A di(meth)acrylate, bisphenol A diglycidyl ether di(meth)acrylate, ethylene glycol di(meth) acrylate, diethylene glycol di(meth)acrylate, triethylene glycol di(meth)acrylate, tetraethylene glycol di(meth)acrylate, dipropyleneglycol di(meth)acrylate, tripropylene glycol di(meth)acrylate, polyethylene glycol di(meth)acrylate, neopentyl glycol di(meth)acrylate, tricyclodecane dimethanol di(meth)acrylate as well as mixtures thereof and (b) 1,3-butylene glycol di(meth)acrylate, 1,4-butanediol di(meth) acrylate, 1,6-hexanediol di(meth)acrylate, 3-methyl-1,5-pentanedioldi(meth)acrylate, alkoxylated di(meth)acrylate, as well as mixtures thereof,
wherein the tri(meth)acrylates are selected from trimethylolpropane tri(meth)acrylates, alkoxylated trimethylolpropane tri(meth)acrylates, alkoxylated glycerol tri(meth)acrylates, pentaerythritol tri(meth)acrylates, alkoxylated pentaerythritol tri(meth)acrylates, alkoxylated pentaerythritol tri(meth) acrylates; and
the tetra (meth)acrylates are selected from ditrimethylolpropane tetra(meth)acrylates, pentaerythritol tetra(meth)acrylates, alkoxylated pentaerythritol tetra(meth)acrylates and mixtures thereof;

ii) from 4 wt.% to 20 wt.% of one or more photoinitiators of formula (I):

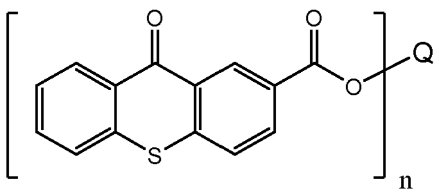

(I)

wherein Q has the following formula (IIa), (IIb) or (IIc):

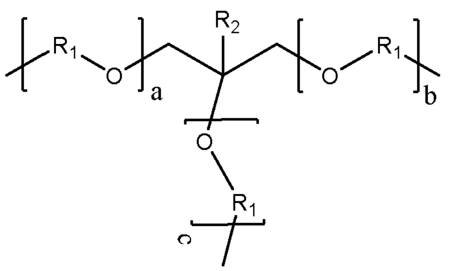

(IIa)

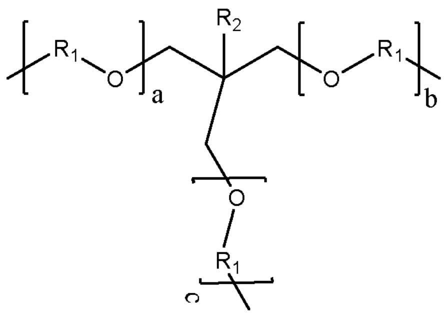

(IIb)

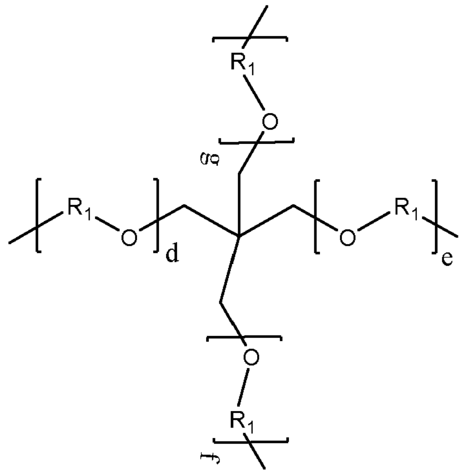

(IIc)

wherein n is equal to or bigger than 1, R1 are identical or different from each other and are selected from the group consisting of $C_1$-$C_3$-alkylene groups, R2 are selected from the group consisting of hydrogen and $C_1$-$C_3$-alkyl groups, and wherein the sum a+b+c is between 3 and 12 and the sum d+e+f+g is between 4 and 16,

iii) from 1 wt.% to 15 wt.% of one or more amino containing compounds selected from the group consisting of aminobenzoate compounds having a weight average molecular weight of at least 400 g/mol eq PS, amine modified polyether based acrylates having a weight average molecular weight of at least 400 g/mol eq PS, and combinations thereof,
iv) from 1 wt.% to 30 wt.% of one or more inorganic pigments and/or one or more organic pigments, and
v) from 0.5 wt.% to 10 wt.% of one or more fillers and/or extenders, selected from the group consisting of carbon fibers, talcs, micas, wollastonites, clays kaolins, carbonates, silicates, sulfates, titanates, alumina hydrates, silica, montmorillonites, graphites, bentonites, vermiculites, wood flours, quartz flours, natural fibers, synthetic fibers and combinations thereof, more preferably selected from the group consisting of carbonates, silicas, talcs, clays and mixtures thereof,

the weight percents being based on the total weight of the UV-LED radically curable offset printing ink.

2. The UV-LED radically curable offset printing ink according to any preceding claim 1, wherein the one or more photoinitiators is of formula (I) and wherein Q has the following formula (IIb-1), (IIb-2) or (IIb-3):

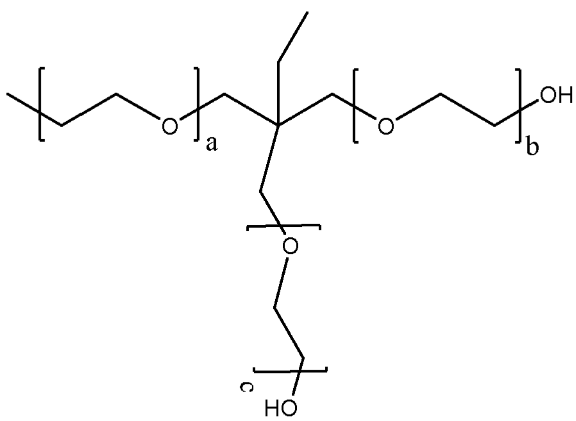

(IIb-1)

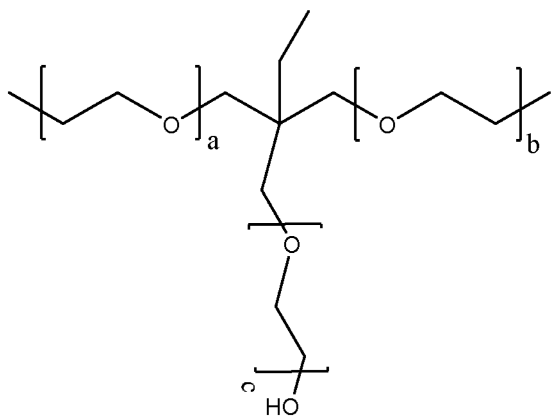

(IIb-2)

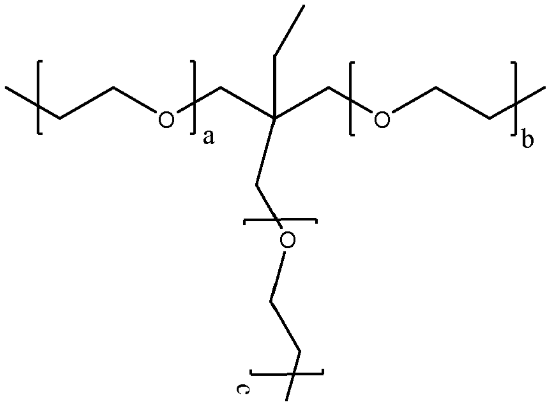

(IIb-3)

with n being equal to 1, 2 or 3 and with the sum a+b+c being between 3 and 12.

3. The LED radically curable offset printing ink according to any preceding claims, wherein the one or more amino containing compounds are selected from the group consisting of aminobenzoate compounds having a weight average molecular weight of at least 700 g/mol eq PS, amine modified polyether based acrylates having a weight average molecular weight of at least 700 g/mol eq PS and combinations thereof.

4. The UV-LED radically curable offset printing ink according to any preceding claims, wherein the one or more amino containing compounds are selected from the group consisting of aminobenzoate compounds, preferably compounds comprising 4-dialkylaminobenzoate.

5. The UV-LED radically curable offset printing ink according to claim 4, wherein the one or more amino containing compounds are selected from the group consisting of aminobenzoate compounds having the formula (III):

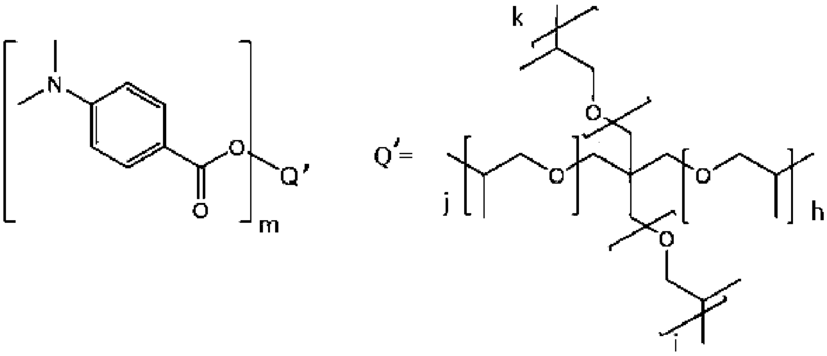

(III)

wherein m is bigger than 1, preferably between 1 and 4, and wherein the sum h+i+j+k is between 3 and 12.

6. The UV-LED radically curable offset printing ink according to any preceding claims, wherein the one or more inorganic pigments and the one or more organic pigments independently have a particle size of less than or equal to 5 μm, preferably less than or equal to 3 μm when measured using a granulometry gauge according to ISO 1524:2013.

7. The UV-LED radically curable offset printing ink according to any preceding claims further comprising one or more waxes preferably selected form the group consisting of paraffin waxes, polyethylene waxes, fluorocarbon waxes, polytetrafluoroethylene waxes carnauba waxes and mixtures thereof.

8. A process for printing a feature on a substrate by an offset printing process comprising the steps of:

a) applying the UV-LED radically curable offset printing ink recited in any one of claims 1 to 8 by offset printing so as

to form an ink layer, and
b) exposing the ink layer to UV light at a dose of at least 150 mJ/cm$^2$, preferably at least 200 mJ/cm$^2$, to cure said ink layer with a UV-LED source.

**9.** The process of claim 8, wherein the step b) consists of exposing the ink layer to one or more wavelengths between 355 nm and 415 nm.

**10.** A use of the one or more photoinitiators in an amount from 4 wt.% to 20 wt.% and the one or more amino containing compounds in an amount from 1 wt.% to 15 wt.%, as recited in claim 1 or 2, for producing a UV-LED radically curable offset printing ink having a viscosity in the range of 2.5 to 25 Pa s at 40°C and 1000 s$^{-1}$, said UV-LED radically curable offset printing ink being suitable for printing one or more features on a security document, said UV-LED radically curable offset printing ink comprising from 10 wt.% to 80 wt.% of radically curable (meth)acrylate compounds, from 1 wt.% to 30 wt.% of one or more inorganic pigments and/or one or more organic pigments and from 0.5 wt.% to 10 wt.% of one or more fillers and/or extenders, the weight percents being based on the total weight of the UV-LED radically curable offset printing ink.

**11.** A printed feature consisting of a cured ink layer made from the UV-LED radically curable offset printing ink recited in any one of claims 1 to 7.

**12.** A security document comprising a substrate and one or more printed features recited in claim 11.

**13.** The security document according to claim 12, wherein the one or more printed features have a total surface larger than or equal to 50%, preferably larger than or equal to 60%, more preferably larger than or equal to 70%, the % being based on the total surface of the substrate onto which said one or more printed features are present.

**14.** The security document according to claim 12 or 13, wherein the substrate is a non-fluorescent substrate.

## Patentansprüche

**1.** Radikalisch härtbare UV-LED-Offsetdruckfarbe mit einer Viskosität im Bereich von 2,5 bis 25 Pa·s bei 40 °C und 1000 s$^{-1}$ zum Offsetdrucken eines Merkmals auf ein Substrat, wobei die radikalisch härtbare UV-LED-Offsetdruckfarbe aufweist:

i) von 10 Gew.-% bis 80 Gew.-% radikalisch härtbare (Meth)acrylatverbindungen bestehend aus einem oder mehreren radikalisch härtbaren (Meth)acrylatoligomeren und einem oder mehreren radikalisch härtbaren (Meth) acrylatmonomeren,

wobei die radikalisch härtbaren (Meth)acrylatoligomere aus der Gruppe bestehend aus Epoxy-(meth) acrylaten, (meth)acrylierten Ölen, (meth)acrylierten epoxidierten Ölen, Polyester-(meth)acrylaten, aliphatischen oder aromatischen Polyurethan-(meth)acrylaten, Polyacrylsäure-(meth)acrylaten, Polyacrylatester-(meth)acrylaten und Mischungen davon ausgewählt sind, noch bevorzugter aus der Gruppe bestehend aus Epoxy-(meth)acrylaten, Polyester-(meth)acrylaten, aliphatischen oder aromatischen Polyurethan-(meth)acrylaten und Mischungen davon ausgewählt sind, und
wobei die radikalisch härtbaren (Meth)acrylatmonomere aus der Gruppe bestehend aus Mono(meth) acrylaten, Di(meth)acrylaten, Tri(meth)acrylaten, Tetra(meth)acrylaten sowie deren Mischungen ausgewählt sind,

wobei die Mono(meth)acrylate aus 2-(2-Ethoxyethoxy)ethyl(meth)acrylat, 2-Phenoxyethyl(meth)acrylat, C12/C14-Alkyl(meth)acrylat, C16/C18-Alkyl(meth)acrylat, Caprolacton(meth)acrylat, cyclischem Trimethylolpropanformal(meth)acrylat, Nonylphenol(meth)acrylat, Isobornyl(meth)acrylat, Isodecyl(meth)acrylat, Lauryl(meth)acrylat, Stearyl(meth)acrylat, Octyldecyl(meth)acrylat, Tridecyl(meth) acrylat, Methoxypoly(ethylenglykol)(meth)acrylat, Polypropylenglykol(meth)acrylat, Tetrahydrofurfuryl(meth)acrylat sowie Mischungen davon ausgewählt sind,
wobei die Di(meth)acrylate aus (a) Bisphenol-A-Di(meth)acrylaten, alkoxyliertem Bisphenol-A-Di(meth) acrylat, Bisphenol-A-Diglycidylether-Di(meth)acrylat, Ethylenglykoldi(meth)acrylat, Diethylenglykoldi(meth)acrylat, Triethylenglykoldi(meth)acrylat, Tetraethylenglykoldi(meth)acrylat, Dipropylenglykoldi(meth)acrylat, Tripropylenglykoldi(meth)acrylat, Polyethylenglykoldi(meth)acrylat, Neopentylglykoldi(meth)acrylat, Tricyclodecandimethanol-Di(meth)acrylat sowie deren Mischungen und (b) 1,3-Butylenglykoldi(meth)acrylat, 1,4-Butandioldi(meth)acrylat, 1,6-Hexandioldi(meth)acrylat, 3-Methyl-1,5-pentandioldi(meth)acrylat, alkoxyliertem Di(meth)acrylat sowie deren Mischungen ausgewählt sind, wobei die Tri(meth)acrylate aus Trimethylolpropan-Tri(meth)acrylaten, alkoxylierten Trimethylolpropan-Tri(meth)acrylaten, alkoxylierten Glycerin-Tri(meth)acrylaten, Pentaerythritol-Tri(meth)acrylaten, alkoxylierten Pentaerythritol-Tri(meth)acrylaten, alkoxylierten Pentaerythritol-Tri(meth)acrylaten ausgewählt sind; und

die Tetra(meth)acrylate aus Ditrimethylolpropan-Tetra(meth)acrylaten, Pentaerythritol-Tetra(meth)acrylaten, alkoxylierten Pentaerythritol-Tetra(meth)acrylaten und Mischungen davon ausgewählt sind;

ii) von 4 Gew.-% bis 20 Gew.-% eines oder mehrerer Photoinitiatoren der Formel (I):

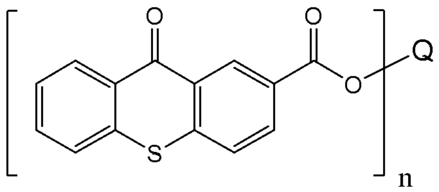

(I)

wobei Q die folgende Formel (IIa), (IIb) oder (IIc) aufweist:

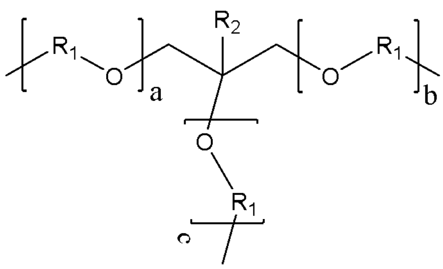

(IIa)

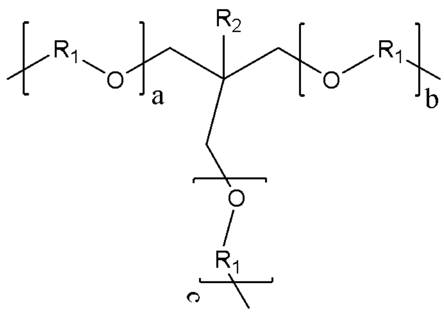

(IIb)

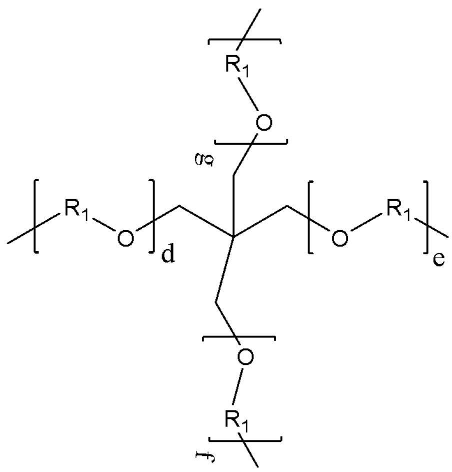

(IIc)

wobei n gleich oder größer als 1 ist, R1 gleich oder voneinander verschieden sind und aus der Gruppe bestehend aus $C_1$-$C_3$-Alkylengruppen ausgewählt sind, R2 aus der Gruppe bestehend aus Wasserstoff und $C_1$-$C_3$-Alkylgruppen ausgewählt sind, und wobei die Summe a+b+c zwischen 3 und 12 und die Summe d+e+f+g zwischen 4 und 16 liegt,

iii) von 1 Gew.-% bis 15 Gew.-% einer oder mehrerer aminohaltiger Verbindungen, die aus der Gruppe bestehend aus Aminobenzoatverbindungen mit einem gewichtsmittleren Molekulargewicht von mindestens 400 g/mol (äquivalent PS), aminmodifizierten Acrylaten auf Polyetherbasis mit einem gewichtsmittleren Molekulargewicht von mindestens 400 g/mol (äquivalent PS) und Kombinationen davon ausgewählt sind,
iv) von 1 Gew.-% bis 30 Gew.-% eines oder mehrerer anorganischer Pigmente und/oder eines oder mehrerer organischer Pigmente, und
v) von 0,5 Gew.-% bis 10 Gew.-% eines oder mehrerer Füllstoffe und/oder Streckmittel, die aus der Gruppe bestehend aus Kohlenstofffasern, Talken, Glimmer, Wollastonit, Tonen, Kaolin, Carbonaten, Silikaten, Sulfaten, Titanaten, Aluminiumoxidhydraten, Siliciumdioxid, Montmorilloniten, Graphiten, Bentoniten, Vermiculiten, Holzmehlen, Quarzmehlen, Naturfasern, synthetischen Fasern und Kombinationen davon ausgewählt sind, noch bevorzugter aus der Gruppe bestehend aus Carbonaten, Siliciumdioxiden, Talken, Tonen und Mischungen davon ausgewählt sind,

wobei sich die Gewichtsprozente auf das Gesamtgewicht der radikalisch härtbaren UV-LED-Offsetdruckfarbe beziehen.

**2.** Radikalisch härtbare UV-LED-Offsetdruckfarbe nach Anspruch 1, wobei der eine oder die mehreren Photoinitiatoren der Formel (I) entsprechen und wobei Q die folgende Formel (IIb-1), (IIb-2) oder (IIb-3) aufweist:

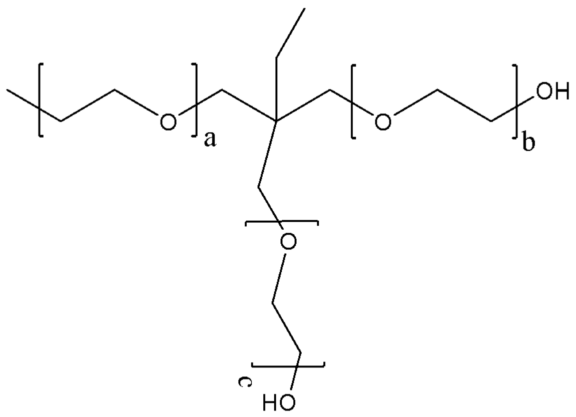

(IIb-1)

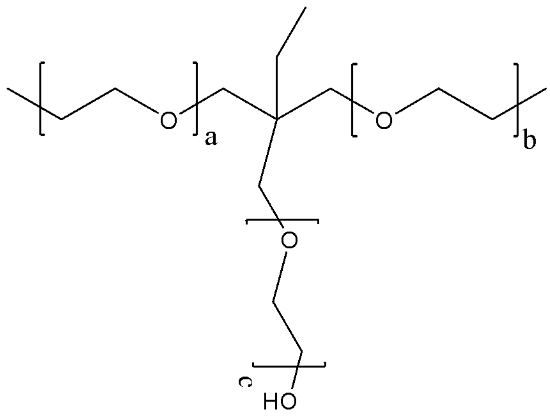

(IIb-2)

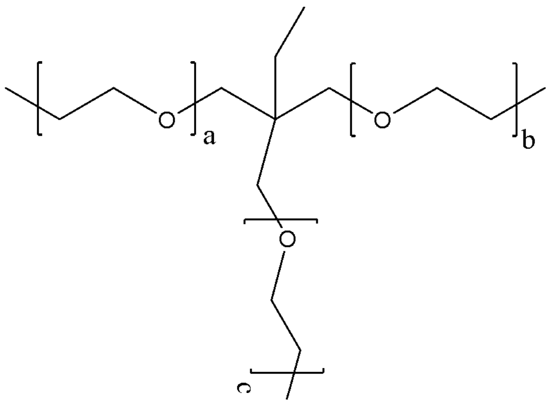

(IIb-3)

wobei n gleich 1, 2 oder 3 ist und die Summe a+b+c zwischen 3 und 12 liegt.

**3.** Radikalisch härtbare LED-Offsetdruckfarbe nach einem der vorstehenden Ansprüche, wobei die eine oder mehreren aminohaltigen Verbindungen aus der Gruppe bestehend aus Aminobenzoatverbindungen mit einem gewichtsmittleren Molekulargewicht von mindestens 700 g/mol (äquivalent PS), aminmodifizierten Acrylaten auf Polyetherbasis mit einem gewichtsmittleren Molekulargewicht von mindestens 700 g/mol (äquivalent PS) und Kombinationen davon ausgewählt sind.

**4.** Radikalisch härtbare UV-LED-Offsetdruckfarbe nach einem der vorstehenden Ansprüche, wobei die eine oder mehreren aminohaltigen Verbindungen aus der Gruppe bestehend aus Aminobenzoatverbindungen ausgewählt sind, vorzugsweise Verbindungen, die 4-Dialkylaminobenzoat aufweisen.

**5.** Radikalisch härtbare UV-LED-Offsetdruckfarbe nach Anspruch 4, wobei die eine oder mehreren aminohaltigen Verbindungen aus der Gruppe bestehend aus Aminobenzoatverbindungen der Formel (III) ausgewählt sind:

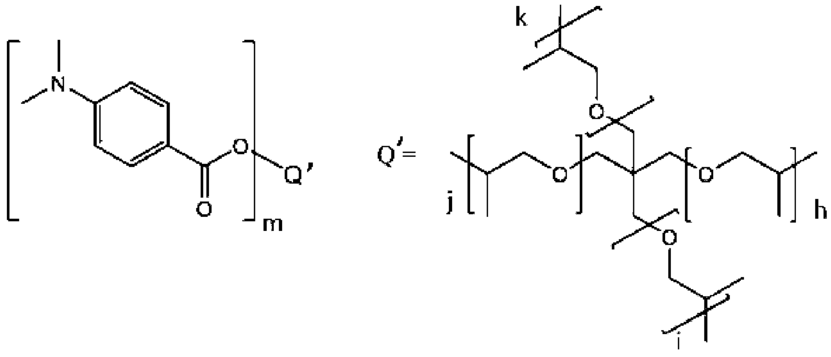

(III)

wobei m größer als 1 ist, vorzugsweise zwischen 1 und 4 liegt, und wobei die Summe h+i+j+k zwischen 3 und 12 liegt.

**6.** Radikalisch härtbare UV-LED-Offsetdruckfarbe nach einem der vorstehenden Ansprüche, wobei das eine oder die mehreren anorganischen Pigmente und das eine oder die mehreren organischen Pigmente unabhängig voneinander eine Partikelgröße von kleiner oder gleich 5 $\mu$m, vorzugsweise kleiner oder gleich 3 $\mu$m, aufweisen, gemessen mit einem Körnungsmessgerät nach ISO 1524:2013.

**7.** Radikalisch härtbare UV-LED-Offsetdruckfarbe nach einem der vorstehenden Ansprüche, die ferner ein oder mehrere Wachse aufweist, die vorzugsweise aus der Gruppe bestehend aus Paraffinwachsen, Polyethylenwachsen, Fluorkohlenstoffwachsen, Polytetrafluorethylenwachsen, Carnaubawachsen und Mischungen davon ausgewählt sind.

**8.** Verfahren zum Drucken eines Merkmals auf ein Substrat mittels eines Offsetdruckverfahrens, das die Schritte aufweist:

a) Aufbringen der in einem der Ansprüche 1 bis 8 genannten, radikalisch härtbaren UV-LED-Offsetdruckfarbe mittels Offsetdruck, um eine Druckfarbenschicht zu bilden, und
b) Aussetzen der Druckfarbenschicht einer UV-Lichtdosis von mindestens 150 mJ/cm$^2$, vorzugsweise mindestens 200 mJ/cm$^2$, um die Druckfarbenschicht mit einer UV-LED-Quelle auszuhärten.

**9.** Verfahren nach Anspruch 8, wobei der Schritt b) darin besteht, die Druckfarbenschicht einer oder mehreren Wellenlängen zwischen 355 nm und 415 nm auszusetzen.

**10.** Verwendung des einen oder der mehreren Photoinitiatoren in einer Menge von 4 Gew.-% bis 20 Gew.-% und der einen oder mehreren aminohaltigen Verbindungen in einer Menge von 1 Gew.-% bis 15 Gew.-%, wie in Anspruch 1 oder 2 angegeben, zur Herstellung einer radikalisch härtbaren UV-LED-Offsetdruckfarbe mit einer Viskosität im Bereich von 2,5 bis 25 Pa·s bei 40 °C und 1000 s$^{-1}$, wobei die radikalisch härtbare UV-LED-Offsetdruckfarbe zum Drucken eines oder mehrerer Merkmale auf ein Sicherheitsdokument geeignet ist, wobei die radikalisch härtbare UV-LED-Offsetdruckfarbe von 10 Gew.-% bis 80 Gew.-% radikalisch härtbare (Meth)acrylatverbindungen, von 1 Gew.-% bis 30 Gew.-% eines oder mehrerer anorganischer Pigmente und/oder eines oder mehrerer organischer Pigmente sowie von 0,5 Gew.-% bis 10 Gew.-% eines oder mehrerer Füllstoffe und/oder Streckmittel aufweist, wobei sich die Gewichtsprozente auf das Gesamtgewicht der radikalisch härtbaren UV-LED-Offsetdruckfarbe beziehen.

**11.** Gedrucktes Merkmal, bestehend aus einer ausgehärteten Druckfarbenschicht, die aus der in einem der Ansprüche 1 bis 7 genannten, radikalisch härtbaren UV-LED-Offsetdruckfarbe hergestellt ist.

**12.** Sicherheitsdokument, das ein Substrat und ein oder mehrere der in Anspruch 11 genannten gedruckten Merkmale aufweist.

**13.** Sicherheitsdokument nach Anspruch 12, wobei das eine oder die mehreren gedruckten Merkmale eine Gesamtfläche aufweisen, die größer als oder gleich 50 %, vorzugsweise größer als oder gleich 60 %, stärker bevorzugt größer als oder gleich 70 % ist, wobei sich der Prozentsatz auf die Gesamtfläche des Substrats bezieht, auf dem das eine oder die mehreren gedruckten Merkmale vorhanden sind.

**14.** Sicherheitsdokument nach Anspruch 12 oder 13, wobei das Substrat ein nicht fluoreszierendes Substrat ist.

## Revendications

**1.** Encre pour impression offset durcissable par voie radicalaire par **DEL** UV ayant une viscosité dans la plage de 2,5 à 25 Pa s à 40 °C et 1 000 $s^{-1}$ pour l'impression offset d'une caractéristique sur un substrat, ladite encre pour impression offset durcissable par voie radicalaire par DEL UV comprenant:\

i) de 10 % en poids à 80 % en poids de composés (méth)acrylate durcissables par voie radicalaire constitués d'un ou plusieurs oligomères de (méth)acrylate durcissables par voie radicalaire et d'un ou plusieurs monomères de (méth)acrylate durcissables par voie radicalaire, lesdits oligomères de (méth)acrylate durcissables par voie radicalaire étant sélectionnés dans le groupe constitué des (méth)acrylates d'époxy, des huiles (méth)acrylées, des huiles époxydées (méth)acrylées, des (méth)acrylates de polyester, des (méth)acrylates de polyuréthane aliphatiques ou aromatiques, des (méth)acrylates d'acide polyacrylique, des (méth)acrylates d'esters de polyacrylate et de mélanges de ceux-ci, de manière davantage préférée sélectionnés dans le groupe constitué des (méth)acrylates d'époxy, des (méth)acrylates de polyester, des (méth)acrylates de polyuréthane aliphatiques ou aromatiques et de mélanges de ceux-ci, et
lesdits monomères de (méth)acrylate durcissables par voie radicalaire étant sélectionnés dans le groupe constitué des mono(méth)acrylates, des di(méth)acrylates, des tri(méth)acrylates, des tétra(méth)acrylates, ainsi que les mélanges de ceux-ci,

dans laquelle les mono(méth)acrylates sont sélectionnés parmi le (méth)acrylate de 2(2-éthoxyéthoxy) éthyle, le (méth)acrylate de 2-phénoxyéthyle, le (méth)acrylate de C12/C14 alkyle, le (méth)acrylate de C16/C18 alkyle, le (méth)acrylate de caprolactone, le (méth)acrylate de triméthylolpropane formal cyclique, le (méth)acrylate de nonylphénol, le (méth)acrylate d'isobornyle, le (méth)acrylate d'isodécyle, le (méth) acrylate de lauryle, le (méth)acrylate de stéaryle, le (méth)acrylate d'octyldécyle, le (méth)acrylate de tridécyle, le (méth)acrylate de méthoxy poly(éthylène glycol), le (méth)acrylate de polypropylène glycol, le (méth)acrylate de tétrahydrofurfuryle, ainsi que les mélanges de ceux-ci,
dans laquelle les di(méth)acrylates sont sélectionnés parmi (a) les di(méth)acrylates de bisphénol A, le di(méth)acrylate de bisphénol A alcoxylé, le di(méth)acrylate d'éther diglycidylique de bisphénol A, le di(méth)acrylate d'éthylène glycol, le di(méth)acrylate de diéthylène glycol, le di(méth)acrylate de triéthylène glycol, le di(méth)acrylate de tétraéthylène glycol, le di(méth)acrylate de dipropylèneglycol, le di(méth) acrylate de tripropylène glycol, le di(méth)acrylate de polyéthylène glycol, le di(méth)acrylate de néopentyl glycol, le di(méth)acrylate de tricyclodécane diméthanol, ainsi que les mélanges de ceux-ci et (b) le di(méth) acrylate de 1,3-butylène glycol, le di(méth)acrylate de 1,4-butanediol, le di(méth)acrylate de 1,6-hexanediol, le di(méth)acrylate de 3-méthyl-1,5-pentanediol, le di(méth)acrylate alcoxylé, ainsi que les mélanges de ceux-ci,
dans laquelle les tri(méth)acrylates sont sélectionnés parmi les tri(méth)acrylates de triméthylolpropane, les tri(méth)acrylates de triméthylolpropane alcoxylé, les tri(méth)acrylates de glycérol alcoxylés, les tri(méth) acrylates de pentaérythritol, les tri(méth)acrylates de pentaérythritol alcoxylés, les tri(méth)acrylates de pentaérythritol alcoxylés; et
dans laquelle les tétra(méth)acrylates sont sélectionnés parmi les tétra(méth)acrylates de ditriméthylolpropane, les tétra(méth)acrylates de pentaérythritol, les tétra(méth)acrylates de pentaérythritol alcoxylés et les mélanges de ceux-ci;

ii) de 4 % en poids à 20 % en poids d'un ou plusieurs photoinitiateurs de formule (I) :

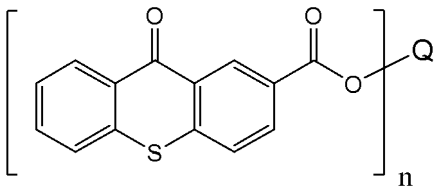

(I)

dans laquelle Q a la formule (IIa), (IIb) ou (IIc) suivante :

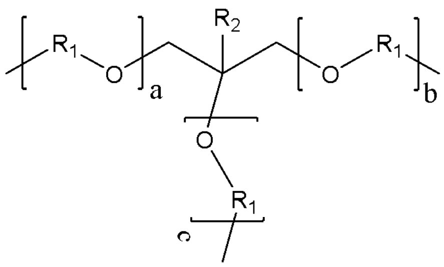

(IIa)

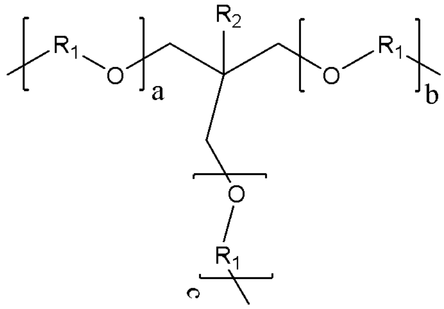

(IIb)

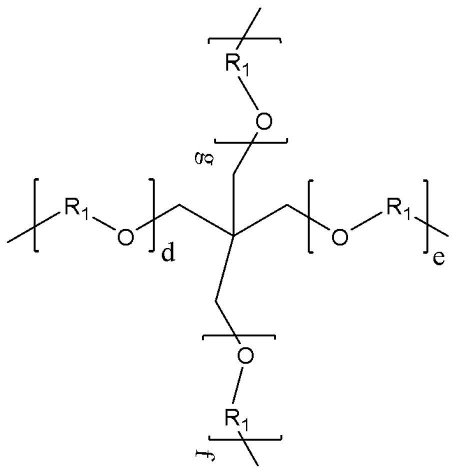

(IIc)

dans laquelle n est supérieur ou égal à 1, les R1 sont identiques les uns aux autres ou différents les uns des autres et sont sélectionnés dans le groupe constitué des groupes $C_1$-$C_3$-alkylènes, les R2 sont sélectionnés dans le groupe constitué de l'hydrogène et des groupes $C_1$-$C_3$-alkyles, et dans laquelle la somme a+b+c est entre 3 et 12 et la somme d+e+f+g est entre 4 et 16,

iii) de 1 % en poids à 15 % en poids d'un ou plusieurs composés contenant un amino sélectionnés dans le groupe constitué de composés aminobenzoate ayant un poids moléculaire moyen en poids d'au moins 400 g/mol éq PS, d'acrylates à base de polyéther modifié par une amine ayant un poids moléculaire moyen en poids d'au moins 400 g/mol éq PS et de combinaisons de ceux-ci,
iv) de 1 % en poids à 30 % en poids d'un ou plusieurs pigments inorganiques et/ou d'un ou plusieurs pigments organiques, et
v) de 0,5 % en poids à 10 % en poids d'un ou plusieurs charges et/ou extendeurs, sélectionnés dans le groupe constitué des fibres de carbone, des talcs, des micas, des wollastonites, des argiles, des kaolins, des carbonates, des silicates, des sulfates, des titanates, des hydrates d'alumine, de la silice, des montmorillonites, des graphites, des bentonites, des vermiculites, des farines de bois, des farines de quartz, des fibres naturelles, des fibres synthétiques et de combinaisons de ceux-ci, de manière davantage préférée sélectionnés dans le groupe

constitué des carbonates, des silices, des talcs, des argiles et de mélanges de ceux-ci,

les pourcentages en poids étant basés sur le poids total de l'encre pour impression offset durcissable par voie radicalaire par DEL UV.

**2.** Encre pour impression offset durcissable par voie radicalaire par **DEL** UV selon une quelconque revendication précédente 1, dans laquelle les un ou plusieurs photoinitiateurs répond à la formule (I) et dans laquelle Q a la formule (IIb-1), (IIb-2) ou (IIb-3) suivante :

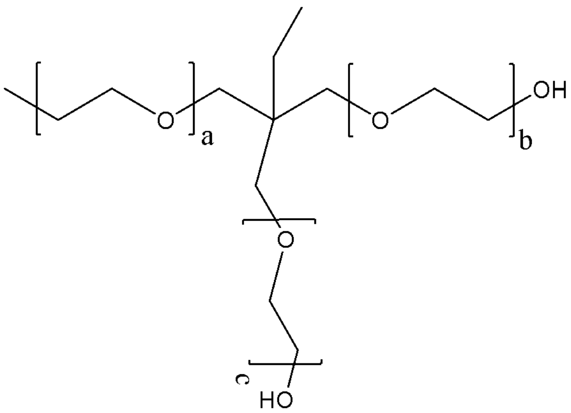

(IIb-1)

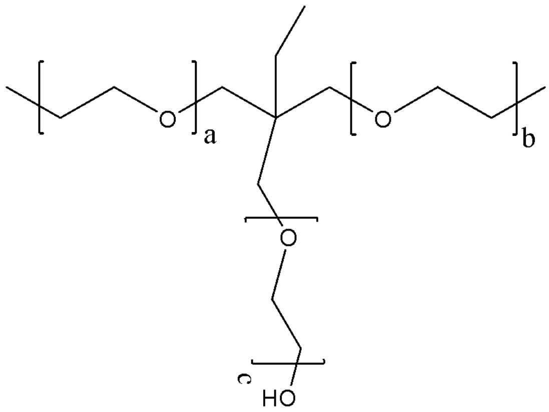

(IIb-2)

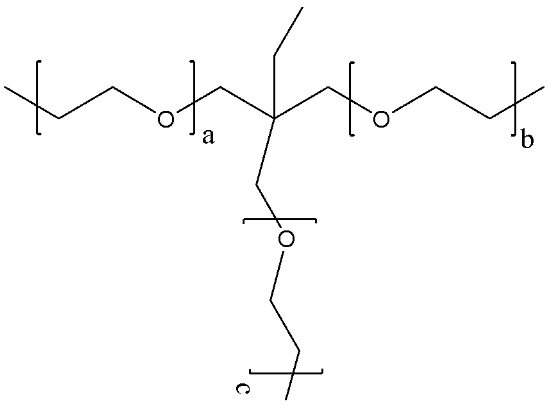

(IIb-3)

avec n étant égal à 1, 2 ou 3 et avec la somme a+b+c étant entre 3 et 12.

**3.** Encre pour impression offset durcissable par voie radicalaire par DEL selon l'une quelconque des revendications précédentes, dans laquelle les un ou plusieurs composés contenant un amino sont sélectionnés dans le groupe constitué des composés aminobenzoate ayant un poids moléculaire moyen en poids d'au moins 700 g/mol éq PS, des acrylates à base de polyéther modifié par une amine ayant un poids moléculaire moyen en poids d'au moins 700 g/mol éq PS et de combinaisons de ceux-ci.

**4.** Encre pour impression offset durcissable par voie radicalaire par DEL UV selon l'une quelconque des revendications précédentes, dans laquelle les un ou plusieurs composés contenant un amino sont sélectionnés dans le groupe constitué des composés aminobenzoate, de préférence des composés comprenant du 4-dialkylaminobenzoate.

**5.** Encre pour impression offset durcissable par voie radicalaire par DEL UV selon la revendication 4, dans laquelle les un ou plusieurs composés contenant un amino sont sélectionnés dans le groupe constitué des composés aminobenzoate ayant la formule (III) :

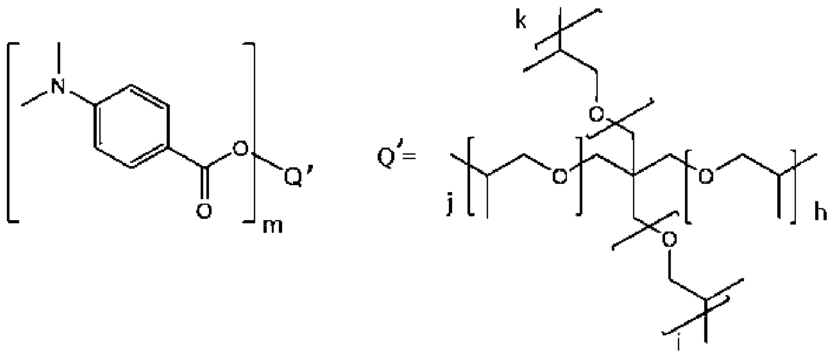

(III)

dans laquelle m est supérieur à 1, de préférence entre 1 et 4, et dans laquelle la somme h+i+j+k est entre 3 et 12.

6. Encre pour impression offset durcissable par voie radicalaire par DEL UV selon l'une quelconque des revendications précédentes, dans laquelle les un ou plusieurs pigments inorganiques et les un ou plusieurs pigments organiques ont indépendamment une taille de particule inférieure ou égale à 5 $\mu$m, de préférence inférieure ou égale à 3 $\mu$m lorsqu'elle est mesurée en utilisant un granulomètre selon l'ISO 1524:2013.

7. Encre pour impression offset durcissable par voie radicalaire par DEL UV selon l'une quelconque des revendications précédentes comprenant en outre une ou plusieurs cires de préférence sélectionnées dans le groupe constitué des cires de paraffine, des cires de polyéthylène, des cires fluorocarbonées, des cires de polytétrafluoroéthylène, des cires de carnauba et de mélanges de celles-ci.

8. Procédé d'impression d'une caractéristique sur un substrat par un procédé d'impression offset comprenant les étapes de :

a) application de l'encre pour impression offset durcissable par voie radicalaire par DEL UV selon l'une quelconque des revendications 1 à 8 par impression offset de façon à former une couche d'encre, et
b) exposition de la couche d'encre à une lumière UV à une dose d'au moins 150 mJ/cm$^2$, de préférence d'au moins 200 mJ/cm$^2$, pour durcir ladite couche d'encre avec une source de DEL UV.

9. Procédé selon la revendication 8, dans lequel l'étape b) est constituée de l'exposition de la couche d'encre à une ou plusieurs longueurs d'onde entre 355 nm et 415 nm.

10. Utilisation des un ou plusieurs photoinitiateurs en une quantité de 4 % en poids à 20 % en poids et des un ou plusieurs composés contenant un amino en une quantité de 1 % en poids à 15 % en poids selon la revendication 1 ou 2 pour produire une encre pour impression offset durcissable par voie radicalaire par DEL UV ayant une viscosité dans la plage de 2,5 à 25 Pa s à 40 °C et 1 000 s$^{-1}$, ladite encre pour impression offset durcissable par voie radicalaire par DEL UV étant appropriée pour l'impression d'une ou plusieurs caractéristiques sur un document de sécurité, ladite encre pour impression offset durcissable par voie radicalaire par DEL UV comprenant de 10 % en poids à 80 % en poids de composés (méth)acrylate durcissables par voie radicalaire, de 1 % en poids à 30 % en poids d'un ou plusieurs pigments inorganiques et/ou d'un ou plusieurs pigments organiques et de 0,5 % en poids à 10 % en poids d'un ou plusieurs charges et/ou extendeurs, les pourcentages en poids étant basés sur le poids total de l'encre pour impression offset durcissable par voie radicalaire par DEL UV.

11. Caractéristique imprimée constituée d'une couche d'encre durcie obtenue à partir de l'encre pour impression offset durcissable par voie radicalaire par DEL UV selon l'une quelconque des revendications 1 à 7.

12. Document de sécurité comprenant un substrat et une ou plusieurs caractéristiques imprimées selon la revendication 11.

13. Document de sécurité selon la revendication 12, dans lequel les une ou plusieurs caractéristiques imprimées ont une surface totale supérieure ou égale à 50 %, de préférence supérieure ou égale à 60 %, de manière davantage préférée supérieure ou égale à 70 %, le % étant basé sur la surface totale du substrat sur lequel lesdites une ou plusieurs

caractéristiques imprimées sont présentes.

**14.** Document de sécurité selon la revendication 12 ou 13, dans lequel le substrat est un substrat non fluorescent.

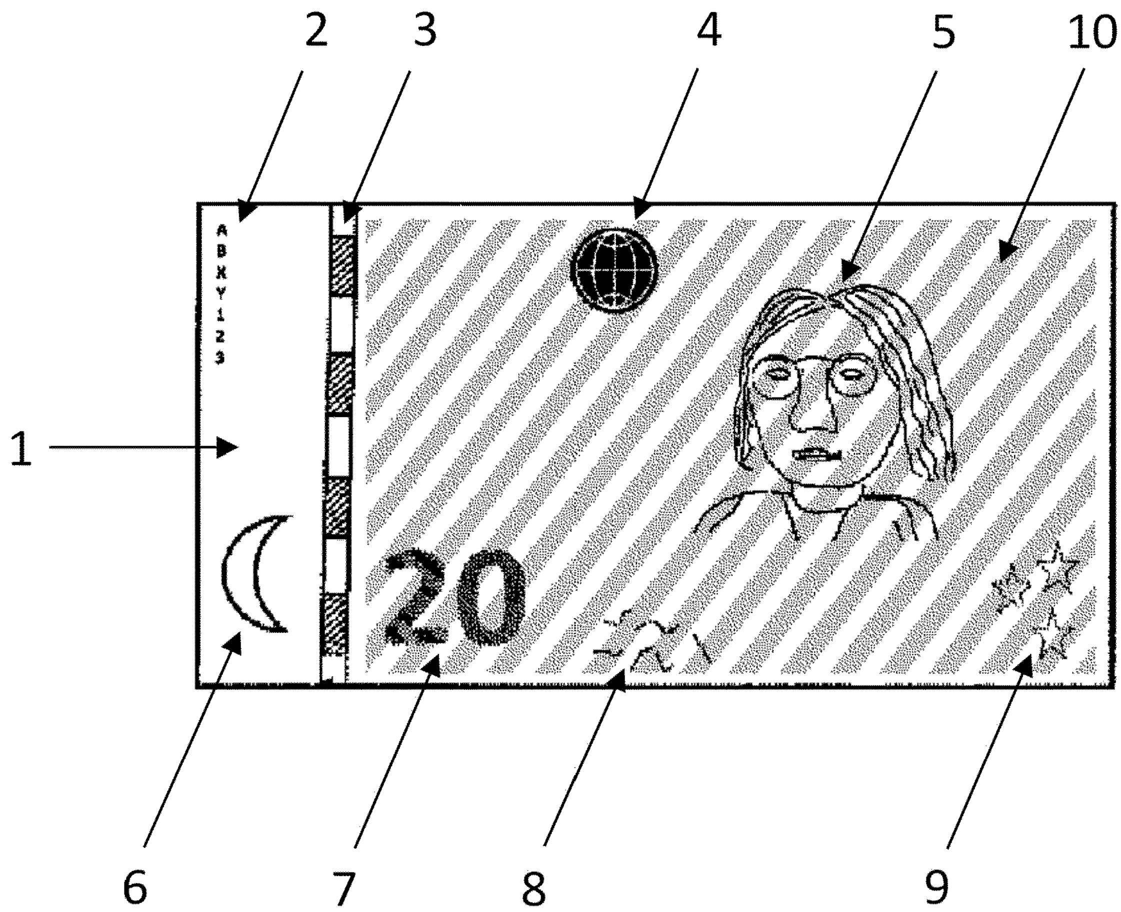


Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4604952 A
- JP 2015155499 A
- WO 2010115986 A2
- WO 2007060133 A2
- US 6565770 B
- WO 2008033059 A2
- WO 2008092522 A1
- WO 2009005733 A2
- US 7108742 B


### Non-patent literature cited in the description


- **P. GLÖCKNER, VINCENTZ**. *Radiation curing*, 2008, 66-67
- Optical Document Security. Artech House, 2005, 71
- *CHEMICAL ABSTRACTS*, 21245-02-3
- *CHEMICAL ABSTRACTS*, 57472-68-1
- *CHEMICAL ABSTRACTS*, 52408-84-1
- *CHEMICAL ABSTRACTS*, 1003567-84-7
- *CHEMICAL ABSTRACTS*, 1003557-17-2